# EUROPEAN PATENT APPLICATION

(11) **EP 4 574 962 A1**
(43) Date of publication of application: **25.06.2025**
(21) Application number: 23856607.9
(22) Date of filing: 22.08.2023
(51) Int. Cl.: C12M 1/38, C12M 1/00, C12Q 1/686

(54) **ALL-IN-ONE MACHINE FOR SAMPLE DETECTION, AND CONTROL METHOD THEREFOR**

(30) Priority: 23.08.2022 CN 202211013322; 23.08.2022 CN 202222224781 U; 23.08.2022 CN 202211017823; 25.08.2022 CN 202211022880; 01.09.2022 CN 202211066517; 08.09.2022 CN 202211094300; 22.09.2022 CN 202211155460; 30.11.2022 CN 202211518935
(71) Applicant: Xi'an Tianlong Science and Technology Co., Ltd, Xi'An, Shaanxi 710018 (CN)
(72) Inventor: PENG, Niancai, Shaanxi 710018 (CN); LI, Ming, Shaanxi 710018 (CN); MIAO, Baogang, Shaanxi 710018 (CN); LI, Zheng, Shaanxi 710018 (CN); SUN, Yao, Shaanxi 710018 (CN); YUAN, Shuanghua, Shaanxi 710018 (CN)
(74) Representative: Ipside
(86) International application number: PCT/CN2023/114200
(87) International publication number: WO 2024/041517

(57) **Abstract**

The present invention pertains to the field of medical devices, particularly to an all-in-one machine for sample testing and a corresponding control method thereof. According to the all-in-one machine for sample testing and the control method thereof provided by the present invention, the all-in-one machine is divided into an upper portion driven by an upper driving unit and a lower portion driven by a lower driving unit. Through the coordinated movement of the upper driving unit and the lower driving unit, the movement process can achieve both high speed and high precision, thus improving the testing efficiency and accuracy. The lower driving unit can achieve a larger range of movement adjustment to meet various extreme distance requirements. Corresponding uncapping/capping mechanisms are designed for sample tubes, extraction kits, and amplification kits to achieve automated uncapping/capping operations. The effective connection of disposable medical consumables is ensured through a process operation monitoring module. By designing separate air ducts, the internal interference of the equipment is minimized and the risk of contamination is reduced, thus ensuring that each module can operate at different stages without being contaminated to the maximum extent.

## Description

### Technical Field

The present invention pertains to the field of medical devices, particularly to an all-in-one machine for sample testing and a corresponding control method.

### Background of the Invention

In vitro diagnostic technology has evolved into an important tool for in vitro analysis of different samples related to organisms, including blood, feces, and swab collection fluids. In this testing technology, nucleic acids serve as carriers of genetic information in organisms. Whether conducting research on nucleic acid sequences and structures, or exploring gene functions and expressions, nucleic acids need to be isolated, purified, and amplified for testing. Therefore, purification and quantitative or qualitative analysis of nucleic acids are very necessary.

In the prior art, multiple processing steps are required for nucleic acid testing, often requiring different reagents and reaction solutions depending on the environment. Therefore, the optimal choice is to perform different reactions at different kit wells by moving the pipetting module, extraction module, etc. to perform corresponding operations among different wells, in order to complete automated transfer, extraction and purification, and establishment of amplification systems for nucleic acids. For example, nucleic acid extraction or other related nucleic acid reactions involving sample transfer, lysis, washing, and elution require a pipetting module to transfer the sample liquid in the sample tube to the extraction kits. The applied extraction kits are configured with a pipetting tip well, a lysis well, a magnetic bead storage well, a washing well, an elution well, a magnetic rod cover well, and an eluent well. The extraction module moves among different wells of the extraction kits to perform purification and elution on the samples. Afterward, the eluent is transferred to the amplification kits through a transfer module. The applied amplification kits are configured with pre-mixing well, seal liquid well, and multiple amplification well. The pipetting module moves among different wells of the amplification kits to establish the amplification system. The ideal execution of all these processes is the full automatic integrated analysis of sample in result out. Driven by this demand, designing integrated kits and corresponding integrated equipment has become the design goal of more and more manufacturers.

Chinese invention patent CN106996984B, titled: unitized reagent strip, provided a totally integrated kit design, which combines the pipetting tips in the extraction process, extraction kits, and PCR amplification kits together in designed strip that can adapt to different needs of sample extraction and amplification; this design has a small number of amplification wells, making it difficult to perform multiple target tests, and the consumables are difficult to seal after use, posing a risk of contamination. Chinese invention patent CN106148512B, titled: scanning real-time microfluidic thermo-cycler and methods for synchronized thermal cycling and scanning optical detection, proposes a solution for using microfluidic kits to perform extraction and amplification detection, although this design operating in a closed state to reduce the risk of system contamination, the kit processing is relatively complex; small-size microchannels, especially those below 0.5mm, need to be designed at a small size due to more influencing factors such as capillary force and surface tension, which greatly increases the complexity of the channel design; in special cases, microfluidic valves need to be configured to constrain the fluid activity range. Chinese invention patent application CN114364811A, titled: sample preparation apparatus and multi-well plate with PCR chip, discloses an integrated consumable where the extraction kit is designed as a traditional large capacity structure, while the amplification kit is configured as a solution of connection to the elution well through a microchannel; this design requiring reliable sealing between the amplification well and the extraction elution well after the complete transfer of eluent; otherwise, performing thermal cycling type amplification causing liquid reflux and cross contamination under temperature drive; however, for constant temperature amplification type solutions, this design can rely on bending the capillary length to ensure that there is no risk of cross contamination such as reflux between the amplification chamber and the extraction elution hole. The solution authorized by US invention patent US9857384B2 designs the reagent kit as a separable type, which can be processed and produced according to different production processes during the production stage; in the actual use stage, different reagent kits can be assembled and combined to be used in conjunction with integrated instruments. From the perspective of the prior art, the integrated testing equipment is increasingly required to perform more heavy target analysis, and the use of segmented large-size consumable design can achieve the analysis goals of sample in result out at a lower cost. However, multiple testing and larger throughput integrated instruments mean a long travel range, and in this case, it is also necessary to balance sample processing speed and operational precision of different processing steps.

However, the existing all-in-one sample testing device usually drives the pipetting module, extraction module, etc. to move only by a single driving source when moving. The single driving source only has one movement speed and precision. If high-precision movement is desired, the movement speed will decrease, which will lead to low testing efficiency and long waiting time in the nucleic acid testing process, not conducive to the accuracy of testing; on the contrary, if the movement speed is increased, the movement precision will be reduced, and problems such as misalignment of hole positions may occur, which will affect the testing results. The uncapping/capping operations of the sample tubes, extraction kits, and amplification kits are all done manually, which increases the risk of sample contamination. At the same time, the efficiency of manual operation is low and the manual fatigue intensity is high. In the prior art, the extraction and testing of nucleic acids are usually carried out using a linear structure. A simple linear combination of the nucleic acid extraction mechanism and the nucleic acid testing mechanism will result in a long overall length of the nucleic acid extraction and testing machine, which not only spans a large area and is inconvenient to use, but also has poor compactness and stability of the overall device. Due to the two different functions of sample extraction and PCR amplification, and in fact, due to spatial limitations, these two functions are not too far apart, which may lead to contamination risks at different stages. For example, always using the same air outlet method will result in the sample extraction area located upstream of the PCR amplification area, spreading aerosols and other pollutants that may contaminate the PCR amplification reaction downstream through airflow, thereby leading to inaccurate testing results. In order to reliably process each individual sample, different disposable consumables such as tips and magnetic rod covers are assembled according to the operation process during automation. This requires testing whether these disposable consumables are connected to the corresponding installation heads. Only with the correct connection of disposable consumables can the entire testing process be accurately executed. In the existing all-in-one sample testing device, due to the lack of subjective initiative of human beings to accurately identify whether disposable consumables have been installed accurately, it may often lead to the inability to make timely and accurate adjustments. Of course, some companies have made some improvement attempts, such as using visual cameras for real-time acquisition. However, due to the fact that the entire transfer process is in a process of change, the background changes are complex and require special processing to determine whether disposable consumables are correctly installed and whether there is a risk of falling during the processing. This has made the entire system design and data processing exceptionally complex, and there are special requirements for environmental light intensity and brightness.

### Summary of the Invention

To address the aforementioned challenges, the present invention is to provide an all-in-one machine for sample testing and a corresponding control method, wherein the all-in-one machine is divided into an upper portion driven by an upper driving unit and a lower portion driven by a lower driving unit. Through the coordinated movement of the upper driving unit and the lower driving unit, the movement process can achieve both high speed and high precision, improving the testing efficiency and accuracy and adapting to high throughput multiple testing applications. The lower driving unit is a dual motor driving structure, and can achieve a larger range of movement adjustment to meet various extreme distance requirements. Corresponding uncapping/capping mechanisms are designed for sample tubes, extraction kits, and amplification kits to achieve automated uncapping/capping operation, which can avoid sample contamination caused by manual operation, improve the efficiency of uncapping/capping operation, and reduce manual fatigue intensity. The effective connection of disposable medical consumables is ensured through the process operation monitoring module. By designing separate air ducts, the internal interference of the equipment is minimized and the contamination risk is reduced, thus ensuring that each module can operate at different stages without being contaminated to the maximum extent.

The technical solution of the present invention is as follows:
An all-in-one machine for sample testing, comprising a casing, wherein the casing internally comprises an upper portion and a lower portion; the upper portion comprising an upper driving unit that can drive the combination module to move horizontally, a combination module provided with a pipetting module and an extraction module; the lower portion comprising a lower driving unit that can drive a carrying platform to move horizontally, the carrying platform provided with a sample tube area, an extraction kit area, and an amplification kit area; the upper driving unit driving the combination module to move in a first time period, the lower driving unit driving the carrying platform to move in a second time period, and there exists an overlapping time period between the first time period and the second time period; the upper driving unit and the lower driving unit cooperating with each other to enable the pipetting module to move between the sample tube area and the extraction kit area to perform sample liquid transfer operations, the extraction module to move within the extraction kit area to perform the sample extraction and purification operations, the pipetting module to move between the extraction kit area and the amplification kit area to perform eluent transfer operations, and the pipetting module to move within the amplification kit area to perform solution dispensing operations.

Furthermore, the upper driving unit drives the combination module to move horizontally at a first speed, with a first precision; the lower driving unit drives the carrying platform to move horizontally at a second speed, with a second precision; wherein the first precision is higher than the second precision and the first speed is lower than the second speed, or the first precision is lower than the second precision and the first speed is higher than the second speed.

Furthermore, the lower driving unit comprises a first motor and a second motor; and the first motor can drive the carrying platform to move within a first movement distance, and the second motor can drive the carrying platform to move within a second movement distance; the first motor and the second motor cooperating with each other to ensure that the movement distance of the carrying platform does not exceed the sum of the first movement distance and the second movement distance; the first motor and the second motor cooperating with each other to drive the carrying platform to extend out of the casing, thereby completely exposing the automated loading area on the carrying platform beyond the casing for loading operations; the automated loading area comprising a sample tube area, an extraction kit area, and an amplification kit area, and the first motor and the second motor work in series.

Furthermore, the upper portion further comprises a sample tube uncapping/capping mechanism, and the sample tube uncapping/capping mechanism acts on the sample tube, which includes a sample tube body and a sample cap; the sample tube uncapping/capping mechanism comprising a cap screwing component for driving the sample cap to rotate relatively to the sample tube body and to unscrew or screw the sample cap from the sample tube body; a lifting component connecting to the cap screwing component for driving the cap screwing component to perform at least vertical movement; the cap screwing component comprising a rotating head provided with an external thread structure that can connect to the internal thread of the sample cap, and can rotate counterclockwise or clockwise to unscrew or screw the sample cap, thereby uncapping or capping the sample tube.

Furthermore, the upper portion further comprises an extraction kit uncapping/capping mechanism, and the extraction kit uncapping/capping mechanism acts on the extraction kit, which is configured with an extraction kit body and an extraction kit cap; the extraction kit uncapping/capping mechanism comprising a first working layer, a second working layer, a third working layer arranging in sequence from top to bottom; a power mechanism locating among them that can drive the second working layer to move up and down in the vertical direction; several elastic components locating between the second working layer and the third working layer; the uncapping/capping mechanism further comprising a limit part that limits the extreme position of the third working layer; the power mechanism driving the second working layer and the third working layer move downwards; when the third working layer reaches the extreme position, the second working layer still moving downwards, compressing the elastic component, and the compressed elastic component is in close contact with the third working layer; the second working layer provided with an extraction kit cap fixing mechanism that is used to fix the extraction kit cap in the second working layer;
the third working layer cooperating with the extraction kit body, and the third working layer can provide support for the extraction kit body during the process of uncapping or capping the extraction kit cap.

Furthermore, the second working layer is provided with a pressing unit for applying pressing force to the extraction kit cap; when the pressing unit is driven to connect to the extraction kit cap, the pressing unit partially connecting to the extraction kit cap, thereby applying pressing force to a partial area of the extraction kit cap; a relative movement driving part for driving the relative movement between the extraction kit cap and a gland part, which pressing and connecting the extraction kit cap onto the extraction kit body, thereby capping the extraction kit during the relative movement.

Furthermore, the upper portion further comprises an amplification kit uncapping/capping mechanism, and the amplification kit uncapping/capping mechanism acts on the amplification kit, which is configured with an amplification kit body and an amplification kit cap; the amplification kit uncapping/capping mechanism comprising an adapter plate, an amplification kit cap fixing plate and an amplification kit body fixing plate arranging in sequence from top to bottom; the adapter plate and the amplification kit body fixing plate movably sleeved on several vertically arranged guide rods I, and can move up and down along the guide rods I; wherein the upper end of each guide rod I is provided with a guide rod I upper limit block that is located above the adapter plate; and the lower end of each guide rod I is provided with a guide rod I lower limit block that is located below the amplification kit body fixing plate; several guide rods II vertically arranged between the adapter plate and the amplification kit cap fixing plate; wherein the upper end of the guide rod II penetrates the adapter plate, and the upper end of the guide rod II is provided with a guide rod II upper limit block that is located above the adapter plate, and the lower end of the guide rod II is connected to the amplification kit cap fixing plate;
an amplification kit cap fixing mechanism provided at the bottom of the amplification kit cap fixing plate, which can fix the amplification kit cap on the amplification kit cap fixing plate; and
the amplification kit body fixing plate is provided with several amplification kit body fixing grooves that penetrate the amplification kit cap fixing plate from top to bottom.

Furthermore, the amplification kit area can be loaded with amplification kit, that comprises a pre-mixing well that stores freeze-dried non-specific reagents not corresponding to the target, N dispensing wells that are physically spaced apart from the pre-mixing well, and a liquid seal reagent storage well, where N is an integer not less than 2; at least one of the N dispensing wells containing primer probe reagents corresponding to not less than M targets, where M is an integer not less than 2; the primer probe reagents stored in a second dried state; the liquid seal reagent storage part storing paraffin oil.

Furthermore, the pipetting module can transfer and discharge liquid at a first pipetting speed, and mix and discharge liquid at a second pipetting speed, where the first pipetting speed is 1/4-1/2 of the second pipetting speed.

Furthermore, the casing further internally comprises a process operation monitoring module comprising:
an intake module that is provided with at least one intake subunit for direct or indirect one-to-one correspondence with at least one medical consumable; the intake module connected to the at least one medical consumable moving to the automated loading area of the carrying platform, the at least one medical consumable connected thereto processing the sample liquid in the automated loading area, in where the automated loading area is configured with a sample tube area, an extraction kit area, and an amplification kit area; upon completion of the sample liquid processing, the intake module transferring the at least one medical consumable connected thereto for recycling;
a monitoring module that is provided with at least one TOF sensor corresponding to the at least one medical consumable, and continuously obtaining the distance between the at least one medical consumable connected thereto and the at least one TOF sensor, during the time period (i)when at least one intake subunit is connected to the at least one medical consumable, and/or (ii) when the at least one medical consumable moves to the automated loading area, and/or (iii) when the at least one medical consumable transfers for recycling;
a processing module determining whether the process operation is correctly executed during different time periods based on the distance information;
the intake module internally comprising no less than two sub-intake modules: the first sub-intake module being a pipetting module provided with at least one pipetting head for direct or indirect one-to-one correspondence with at least one pipetting Tip head; the second sub-intake module being an extraction module provided with at least one magnetic rod cover installation part for direct or indirect one-to-one correspondence with at least one magnetic rod cover.

Furthermore, the carrying platform further comprises a thermal block for supplying amplification reaction conditions, a first air vent located in the casing; the lower driving unit driving the carrying platform to move relatively to the first air vent, the lower driving unit driving the carrying platform to connect to the first air vent during the time period of thermal amplification reaction in the amplification kit area to form a first air duct, while the carrying platform is spaced apart from the first air vent during at least part of the time period other than the time period of the thermal amplification reaction.

Furthermore, the casing further comprises a second air vent that is located on the same side wall of the casing as the first air vent; the second air vent comprising an independent air duct connected thereto, and the second air vent and the connected independent air duct are in operation to discharge the air in the casing during at least part of the time period when the carrying platform is spaced apart from the first air vent; and the casing further comprises a third air vent that is located on the same side wall of the casing as the first air vent; and the casing further comprises a fourth air vent at the bottom or top of the casing, the third air vent and the fourth air vent forming a second air duct with a first ventilation direction during at least part of the time period; the third air vent and the fourth air vent forming a third air duct with a second ventilation direction during the time period of the thermal amplification reaction in the amplification kit area.

Furthermore, the combination module further comprises an identification module, and the upper driving unit can cooperate with the lower driving unit to at least partially overlap the first time period during which the corresponding identification module moves with the second time period during which the corresponding carrying platform moves; the consumable identification camera of the identification module performing dynamic scanning identification or static scanning identification.

A control method of an all-in-one machine for sample testing, using the above all-in-one machine for sample testing, comprising the following steps,
**a sample liquid transfer step:** the upper driving unit driving the pipetting module to move during a first time period, the lower driving unit driving the carrying platform to move during a second time period; the first and second time periods overlapping at least partially, and the upper and lower driving units cooperate with each other to drive the pipetting module to move between the sample tube and the lysis well of the extraction kit to perform sample liquid transfer operations;
**a sample extraction and purification step:** the upper driving unit driving the extraction module to move during a first time period, and the lower driving unit driving the carrying platform to move during a second time period; the first and second time periods overlapping at least partially, and the upper and lower driving units cooperate with each other to drive the extraction module to move among the extraction kit wells to perform sample liquid extraction and purification operations;
**an amplification system establishment step:** the upper driving unit driving the pipetting module to move during a first time period, and the lower driving unit drives the carrying platform to move during a second time period; the first and second time periods overlap at least partially; and the upper and lower driving units cooperate with each other to drive the pipetting module to move between the elution well of the extraction kit and the pre-mixing well of the amplification kit to perform eluent transfer operation; the pipetting module performing mixing operations at the pre-mixing well, where n is a positive integer; the mixing operation involving the pipetting module aspirating the eluent from the elution well and then dispensing it into the pre-mixing well; after the thoroughly mixing of the eluent and the freeze-dried reagent, the upper and lower driving units cooperating with each other to drive the pipetting module to perform solution dispensing operations among the amplification kit wells.

Furthermore, before the sample liquid transfer step, further comprising:
**a sample tube uncapping step:** the lifting component operating to lower the sample tube uncapping/capping mechanism to the position corresponding to the target sample tube; the cap screwing component rotating counterclockwise/clockwise to drive the rotating head screwed with the sample cap; the cap screwing component continuously rotating to drive the sample cap to rotate counterclockwise/clockwise; the cap screwing component stopping to rise when the sample cap is unscrewed from the sample tube;
after the sample liquid transfer step, further comprising:
   **a sample tube capping step:** the lifting component operating to lower the sample tube uncapping/capping mechanism to the position corresponding to the target sample tube; the cap screwing component rotating clockwise/counterclockwise to drive the sample cap screwed onto the sample tube body; the cap screwing component continuously rotating clockwise/counterclockwise to drive the rotating head to disengage from the sample cap, and then the cap screwing component rises.

Furthermore, further comprising:
**a sample tube uncapping/capping sensing step:** when the cap screwing component rises to a first position, the sensor detecting whether the cap screwing component is directly or indirectly connected to the sample cap;
when the cap screwing component rises to a second position, the sensor detecting whether the cap screwing component is directly or indirectly connected to the sample tube body; a processing module determining whether the sample cap and sample tube body are correctly unscrewed or screwed based on the two detecting results from the sensor.

Furthermore, before the sample liquid transfer step, further comprising:
**an extraction kit uncapping step:** an extraction kit uncapping step: a second lifting motor driving a second and third working layers to move downwards along the Z axis, compressing elastic components therebetween; the lower driving unit driving the extraction kit area to move along the Y axis, making the extraction kit cap slot in the second working layer snap on the flange of the extraction kit cap, the extraction kit body fixing groove in the third working layer snapping on the extraction kit body flange; the second lifting motor driving the second working layer to move upwards along the Z axis, the elastic components between the second and third working layers still keeping compressed state; the extraction kit area continuously moving along the Y axis until the extraction kit cap inserted into the extraction kit cap slot; achieving the target of opening the extraction kit under the condition of consistently pressing the extraction kit body.

Specifically, the lower driving unit drives the extraction kit area to move along the Y axis to the position corresponding to the entrance end of the extraction kit uncapping/capping mechanism, and the second lifting motor drives the second and third working layers to move downwards along the Z axis, causing the third working layer to reach the lower extreme position; at this point, the lower edge of the extraction kit body fixing groove on the third working layer corresponds to the extraction kit connecting plate of the extraction kit body, that is, the lower edge of the extraction kit body fixing groove is basically flush with the upper surface of the extraction kit connecting plate; the second lifting motor continues to drive the second working layer to move downwards along the Z axis, compressing the elastic component between the second and third working layers, and making the highest point of the uncapping protrusion at the entrance end of the extraction kit cap slot on the second working layer slightly higher than the tube cap plate of the extraction kit cap; the lower driving unit drives the extraction kit area to move along the Y axis, close to the extraction kit uncapping/capping mechanism, so that a small part of the second flying edge of the tube cap plate enters the entrance end of the extraction kit cap slot, while the lower edge of the extraction kit body fixing groove can press the extraction kit connecting plate of the extraction kit body, and play a fixing role; the extraction kit body is fixed on the extraction kit area, and the extraction kit area can continue to move along the Y axis, so that the second flying edge of the tube cap plate further enters the entrance end of the extraction kit cap slot; the cap prying part of the uncapping protrusion slightly pries the extraction kit cap, and at this time, the lower edge of the extraction kit body fixing groove still presses the extraction kit connecting plate of the extraction kit body for fixing; the second lifting motor drives the second working layer to move upwards a small distance along the Z axis, in order to increase the force of the uncapping protrusion to pry the extraction kit cap. At this time, the elastic component between the second and third working layers is still in a compressed state; the lower edge of the extraction kit body fixing groove still presses the first flying edge of the extraction kit body for fixing, and the extraction kit area continues to move along the Y axis, until the extraction kit cap is fully inserted into the extraction kit cap slot. In this process, the uncapping protrusion pries the entire extraction kit cap, and the extraction kit cap is fully inserted into the extraction kit cap slot; in this process, two fixed bolts provided at both sides of the extraction kit area are respectively clamped into clamping holes on both ends of two fixed strips below the extraction kit uncapping/capping mechanism, forming four-point fixation; finally, the second lifting motor drives the second working layer to move upwards along the Z axis, in order to pull out the entire extraction kit cap inserted in the extraction kit cap slot based on the second flying edge as the force point; after completing the uncapping operation, the extraction kit body is located in the extraction kit slot of the extraction kit area; the extraction kit cap is nested in the extraction kit cap slot of the second working layer.
after the amplification system establishment step, further comprising:
**an extraction kit capping step:** the second lifting motor driving the second and third working layers to move downwards along the Z axis, the second working layer provided with a pressing unit for applying pressing force to the extraction kit cap; when the pressing unit is driven to connect to the extraction kit cap, the pressing unit partially connected to the extraction kit cap, thereby applying pressing force to a partial area of the extraction kit cap; further provided with a relative movement driving part, the extraction kit cap relatively moving with a gland part driven by the relative movement driving part, the extraction kit cap being completely pressed and connected onto the extraction kit body, by the relative movement the extraction kit being capped.

Specifically, the extraction kit area moves along the Y axis to the position corresponding to the entrance end of the extraction kit uncapping/capping mechanism; next, the second lifting motor drives the second and third working layers, to move downwards along the Z axis, causing the third working layer to reach the lower extreme position; at this point, the lower edge of the extraction kit body fixing groove on the third working layer corresponds to the extraction kit connecting plate of the extraction kit body, that is, the lower edge of the extraction kit body fixing groove is flush with the upper surface of the extraction kit connecting plate; the extraction tube cap opening of the extraction kit cap nested in the extraction kit cap slot of the second working layer is higher than the height of the extraction tube opening of the extraction kit body of the loading platform. Next, the extraction kit area continues to move along the Y axis until the entire extraction kit body is inserted into the extraction kit body fixing groove; the second lifting motor drives the second working layer to move downwards along the Z axis, so that the extraction kit cap nested in the extraction kit cap slot is capped on the extraction kit body; at this time, the gland driving motor with a changed coordination status drives the extraction kit cap and the extraction kit body to be pressed together and locked. The converted pressing force achieves a greater clamping force between the extraction kit cap and the extraction kit body. The lower driving unit drives the carrying platform to move, realizing the rolling motion of the pressing unit on the surface of the cap, and completing the application of uniform pressing force on almost all surfaces of the extraction kit cap, ensuring the sealing of the extraction kit cap and the extraction kit body. The second lifting motor drives the second working layer to move upwards a small distance along the Z axis, so that the highest point of the uncapping protrusion is slightly lower than the tube cap plate of the extraction kit cap; the extraction kit area is withdrawn from the extraction kit uncapping/capping mechanism along the Y axis, and the extraction kit uncapping/capping mechanism moves upwards to reset along the Z axis.

Furthermore, the relative positions of the extraction kit and the sample tube area are respectively provided with a first pipetting tip well, a lysis well, a magnetic bead storage well, a washing well, an elution well, a magnetic rod cover well, and a second pipetting tip well from near to far; and the number of washing wells is more than one;
in the sample liquid transfer step, wherein the sample liquid transfer operation involves: moving pipetting module to the first pipetting tip well and loading it with the sample liquid pipetting tip; then transferring the sample liquid from the sample tube to the lysis well of the extraction kits; then recycling the sample liquid pipetting tip to the first pipetting tip well;
in the sample extraction and purification step, wherein the sample extraction and purification operation involves: moving the extraction module to the magnetic rod cover well position and loading it with the magnetic rod cover; then the extraction module moving to the magnetic bead storage well position, the magnetic rod declining and extending into the magnetic rod cover to adsorb the magnetic beads from the magnetic bead storage well to the magnetic rod cover; the extraction module transferring the magnetic beads to the lysis well, the magnetic rod cover vibrating and mixing in the lysis well; the magnetic beads adsorbing lysed nucleic acid fragments, the extraction module transferring the magnetic beads to the washing well for washing and purification; and if multiple washing and purification are required, the extraction module driving the magnetic beads to transfer among multiple washing wells in sequence; after washing and purification, the extraction module moving to the elution well position and releasing of nucleic acid fragments in the elution well; the extraction module transferring the magnetic beads to the magnetic bead storage well recycling, the magnetic rod rising, and the extraction module recycling the magnetic rod cover back into the magnetic rod cover well.

Furthermore, the amplification system set-up step involves: moving the pipetting module to the second pipetting tip well and loading it with the eluent pipetting tip, and transferring the eluent from the elution well of the extraction kit to the pre-mixing well of the amplification kit in m batches, where m is an integer greater than or equal to 2.

Furthermore, in the amplification system establishment step, the solution dispensing operation involves: transferring the thoroughly pre-mixed solution to dispensing wells of the amplification kit; dispensing paraffin oil from the liquid seal reagent storage part to dispensing wells by aspirating once and dispensing multiple times; and the volume of paraffin oil in each dispensing well is smaller than the volume of pre-mixed solution.

Furthermore, before the sample liquid transfer step, further comprising:
a loading configuration step: with an opening and closing part opened, the first and second motors in the lower driving unit working in series to drive the automated loading area contained in the carrying platform outside the casing; loading the sample tube in the sample tube area, loading the extraction kits in the extraction kit area, loading the amplification kits in the amplification kit area; then the first and second motors working in series to drive the automated loading area back into the casing, with the opening and closing part closed;
a scanning identification step: the upper driving unit driving the identification module to move during a first time period, and the lower driving unit driving the carrying platform to move during a second time period; the first and second time periods overlapping at least partially, and the identification module performs scanning identification on a to-be-identified target; when the upper and lower driving units drive simultaneously, the consumable identification camera of the identification module performing dynamic scanning, and when the upper driving unit drives separately, the consumable identification camera of the identification module performing static scanning.

To sum up, by using the above-mentioned technical solution, the present invention has the following beneficial effects:
1. The present invention divides the all-in-one machine into an upper portion driven by an upper driving unit and a lower portion driven by a lower driving unit. Through the coordinated movement of the upper driving unit and the lower driving unit, the movement process can achieve both high speed and high precision, improving the testing efficiency and accuracy and adapting to high throughput multiple testing applications.
2. The lower driving unit of the present invention is of a dual motor driving structure, which ensures the compact structure and stable function of the all-in-one machine for sample testing, and realizes long-distance precision movement of the sample tube area, extraction kit area, and amplification kit area, ensuring the stable automation setting of the entire high-throughput and higher sample size testing system. It also adapts to more target analysis scenarios under dispensing operation. At the same time, the dual motor structure solves the problem of increased weight caused by the large number of modules in the all-in-one machine for sample testing, which is not suitable for long-term use due to the possibility of deformation and jamming caused by excessive long axis transmission.
3. Corresponding uncapping/capping mechanisms are designed for sample tubes, extraction kits, and amplification kits to achieve automated uncapping/capping operation in the present invention, which can avoid sample contamination caused by manual operation, and improve the efficiency of uncapping/capping operation, and reduce manual fatigue intensity.
4. The sample tube uncapping/capping mechanism of the present invention utilizes a rotating head with external threads to match the internal threads of the sample tube, thereby maximizing the utilization of the threads inherent in the screw cap type sample cap. Further, by matching design of reverse threads, the rotating head can rotate in the same direction after rotary connection to the sample cap to achieve the unscrewing of the sample cap and the sample tube body. It is also suitable for the screwing and capping process, and achieves the rotary uncapping operation of the sample tube under the coordination of lifting and lowering movements through different drives.
5. The present invention can test whether two types of medical consumables (i.e., the pipetting tip and magnetic rod cover) are correctly installed by the process operation monitoring module, and whether the pipetting process and/or sample extraction and purification process are correctly executed. This achieves the effect of process monitoring for different functions in complex multifunctional systems.
6. By designing separate air ducts in the present invention, the internal interference of the equipment is minimized and the contamination risk is reduced, ensuring that each module can operate at different stages without being contaminated to the maximum extent.
7. The amplification kits of the present invention will form a freeze-dried state by freeze-drying non-specific reagents that do not correspond to specific targets, and then store them in the pre-mixing well. Instead, primer probe reagents corresponding to the targets will be stored in at least part of the N dispensing wells physically spaced apart in the pre-mixing part in a second dry state. This utilizes the design concept of separation, and the freeze-dried non-specific reagents can be efficiently dissolved and mixed. The second dry state can be achieved at a lower cost, with less overall contamination risk. In combination with the liquid seal reagent storage part, the amplification process can achieve realized liquid sealing, ensuring higher testing precision and efficiency.
8. When transferring the eluent, the present invention adopts a stepwise addition method to prevent excess eluent from being added at once, which may cause the freeze-dried reagent to be unable to dissolve immediately and result in the eluent overflowing.
9. The pipetting module of the present invention adopts a low pipetting speed during the pipetting process, which ensures no bubbles during pipetting and dispensing. In the mixing operation, a high pipetting speed is used to efficiently mix the eluent with the freeze-dried reagent, and the mixing process is more thorough.
10. The extraction kit of the present invention is provided with a first pipetting tip well for sample liquid transfer and a second pipetting tip well for eluent transfer at both ends. In the process of sample extraction and purification operation, the extraction and purification process with the magnetic rod cover and the sample liquid transfer process, the eluent transfer process with the sample liquid pipetting tip can avoid overlapping displacement, reducing the risk of cross contamination during the extraction process due to sample evaporation.

### Brief Description of the Drawings

Fig. 1 is a schematic diagram of the functional modules of the all-in-one machine of the present invention;
Fig. 2 is a schematic diagram of the internal structure of the all-in-one machine of the present invention;
Fig. 3 is a schematic diagram of the internal structure of the all-in-one machine of the present invention in another state;
Fig. 4 is a structural diagram of the lower driving unit of the present invention;
Fig. 5 is a structural diagram of the carrying platform matched with the lower driving unit in the present invention;
Fig. 6 is a schematic diagram of the driving principle of the lower driving unit of the present invention;
Fig. 7 is a schematic diagram of the overall appearance structure of the all-in-one machine of the present invention;
Fig. 8 is a schematic diagram of the sample liquid transfer principle of the present invention;
Fig. 9 is a schematic diagram of the principle of performing nucleic acid extraction and purification operations on the extraction kits of the present invention;
Fig. 10 is a schematic diagram of the eluent transfer principle of the present invention;
Fig. 11 is a schematic diagram of the principle of establishing an amplification system using the amplification kits of the present invention;
Fig. 12 is a structural diagram of the sample tube uncapping/capping mechanism of the present invention;
Fig. 13 is a schematic diagram of the internal rotating structure of the sample tube uncapping/capping mechanism of the present invention;
Fig. 14 is a schematic diagram of a front sectional view of a cap screwing component of the present invention;
Fig. 15 is a schematic diagram of a front sectional view of the cap screwing component of another elastic arrangement in the present invention;
Fig. 16 is a structural diagram of the sample tube of the present invention;
Fig. 17 is a structural diagram of the sample tube support of the present invention;
Fig. 18 is a schematic diagram of the cap screwing component of the present invention ready to perform the uncapping state;
Fig. 19 is a schematic diagram of the rising process of the sample cap connected to the cap screwing component of the present invention;
Fig. 20 is a structural diagram of the extraction kit of the present invention;
Fig. 21 is a structural diagram of the extraction kit uncapping/capping mechanism and the carrying platform of the present invention;
Fig. 22 is a structural diagram of an extraction kit uncapping/capping mechanism provided by Embodiment 1;
Fig. 23 is a matching example diagram of the running unit of the present invention;
Fig. 24 is a structural diagram of an extraction kit uncapping/capping mechanism provided by Embodiment 2;
Fig. 25 is a schematic diagram of the extraction kit capping principle in the traditional solution;
Fig. 26 is a schematic diagram of the extraction kit capping principle in the present invention;
Fig. 27 is a schematic diagram of the extraction kit capping action in the present invention;
Fig. 28 is a structural diagram of a capping driving unit provided by Embodiment 1;
Fig. 29 is an installation diagram of the capping driving unit and the extraction kit uncapping/capping mechanism in Fig. 28;
Fig. 30 is a structural diagram of a capping driving unit provided by Embodiment 3;
Fig. 31 is an installation diagram of the capping driving unit and the extraction kit uncapping/capping mechanism in Fig. 30;
Fig. 32 is a structural diagram of the elastic unit of the present invention;
Fig. 33 is a photograph of the amplification kit in the present invention;
Fig. 34 is a structural diagram of the label of the amplification kit;
Fig. 35 shows the comparison of testing results between the dried probe primer reagent and the liquid reagent using the present invention;
Fig. 36 shows the comparison of testing results between the freeze-dried reagent and the liquid reagent using the present invention;
Fig. 37 is a production flow chart of the amplification kit of the present invention;
Fig. 38 shows the stability comparison test results of the amplification kits of the present invention;
Fig. 39 is a schematic diagram of the process of testing the connection between the pipetting head and the pipetting tip using a TOF sensor according to the present invention;
Fig. 40 is a schematic diagram of the principle of obtaining distance information of the pipetting tip using a TOF sensor in the present invention;
Fig. 41 is a schematic diagram of the connection between the multiple pipetting tips and the multiple pipetting heads of the present invention;
Fig. 42 is a schematic diagram of testing in different state using multiple TOF sensors after connecting the multiple pipetting tips of the present invention;
Fig. 43 is a schematic diagram of the process of connecting multiple magnetic rod cover installation parts and magnetic rod covers of the extraction module of the present invention;
Fig. 44 is a schematic diagram of different methods for identifying the tilted installation state;
Fig. 45 is a schematic diagram of the extraction module and the pipetting module of the present invention;
Fig. 46 is a structural diagram of the combination module of the present invention;
Fig. 47 is a schematic diagram of the second and fourth air ducts of the present invention;
Fig. 48 is a control timing diagram of the all-in-one machine of the present invention; and
Fig. 49 is a control module block diagram of the all-in-one machine of the present invention.

Explications: 20-sample tube uncapping/capping mechanism, 2001-lifting frame, 2002-lifting encoder, 2003-lifting driving part, 2004-lifting lead screw, 2005-vertical guide rail, 2006-cap screwing slider, 2007-rotary driving part, 2008-rotary reducer, 2009-rotary driving gear, 2010-rotating head, 2011-rotary sleeve, 2012-limiter, 2013-limit stopper, 2014-sensor, 2015-cap screwing bearing, 2016-cap screwing linkage device, 2017-cap screwing rotating shaft 2018-limit pin, 2019-rotary transmission gear, 2020-cap screwing buffer piece, 2021-tube body base, 2022-sample tube support, 2023-spring connecting piece, 2024-clamping structure, 30-extraction kit uncapping/capping mechanism, 3001-extraction kit body, 3002-extraction kit cap, 3003-extraction kit connecting plate, 3004-extraction tube body, 3005-extraction tube opening, 3006-first flange, 3007-extraction tube cap, 3008-tube cap plate, 3009-second flange, 3010- extraction kit cap fixing mechanism, 3011-extraction kit body fixing mechanism, 3012-extraction kit slot, 3013-fixed bolt, 3014-first working layer, 3015-second lifting motor, 3016-extraction kit uncapping/capping lead screw, 3017-lead screw connecting base, 3018-second working layer, 3019-third working layer, 3020-first guide rod, 3021-elastic component, 3022-extraction kit cap slot, 3023-first guide rod upper limit block, 3027-second guide rod, 3031-first pulley, 3032-second pulley, 3033-third pulley, 3034-fourth pulley, 3041-first extraction kit uncapping/capping lead screw, 3042-second extraction kit uncapping/capping lead screw, 3043-third extraction kit uncapping/capping lead screw, 3044-fourth extraction kit uncapping/capping lead screw, 3045-uncapping/capping conveyor belt, 3046-output pulley, 3047-training wheel, 3050-gland part, 3051-pressing unit, 3052-roller frame, 3060-capping driving unit, 3061-gland driving motor, 3062-gland gear, 3063-sector output gear, 3064-gland rotating shaft, 3065-first bevel gear, 3066-second bevel gear, 3067-transfer bar, 3068-gland conveyor belt, P10-pressing force, S101-face type pressing part, S102-line type pressing part, F101-face type pressing force, F102-line type pressing force, S1021-pressing contact part, RM01-relative movement, 3070-elastic unit, 40-identification module, 50-pipetting module, 5001-pipetting head, 5002-TOF sensor, 5003-pipetting tip, 5004-assembly part, 5005-magnetic rod cover installation part, 5006-magnetic rod cover, 5007, 5008-testing subunit, 60-extraction module, 70-amplification kit uncapping/capping mechanism, 101-first motor, 102-first lead screw, 103-first slider, 104-first platform, 105-first guide rail, 106-slideway component, 201-second motor, 202-second lead screw, 203-second slider, 204-carrying platform, 205-sliding chamber, 207-second guide rail, 208-slideway unit, 301-casing, 302-opening and closing part, 303-automated loading area, 304-sample tube area, 305-extraction kit area, 306-amplification kit area, 307-radiator, 308-bottom fan, 309-exhaust channel, 310-optical inspection module, 315-third motor, 316-third lead screw, 801-first air vent, 802-second air vent, 8021-independent air duct, 8022-top fan, 803-third air vent, 8031-middle fan, 804-fourth air vent.

### Detailed Description of Embodiments

The present invention will now be described in detail with reference to the accompanying drawings.

The present invention will be further described in detail in combination with drawings and embodiments for a clearer understanding of the object, technical solution and advantages of the present invention. It should be understood that the specific embodiments described herein are only used to explain rather than limit the present invention.

### Embodiment 1

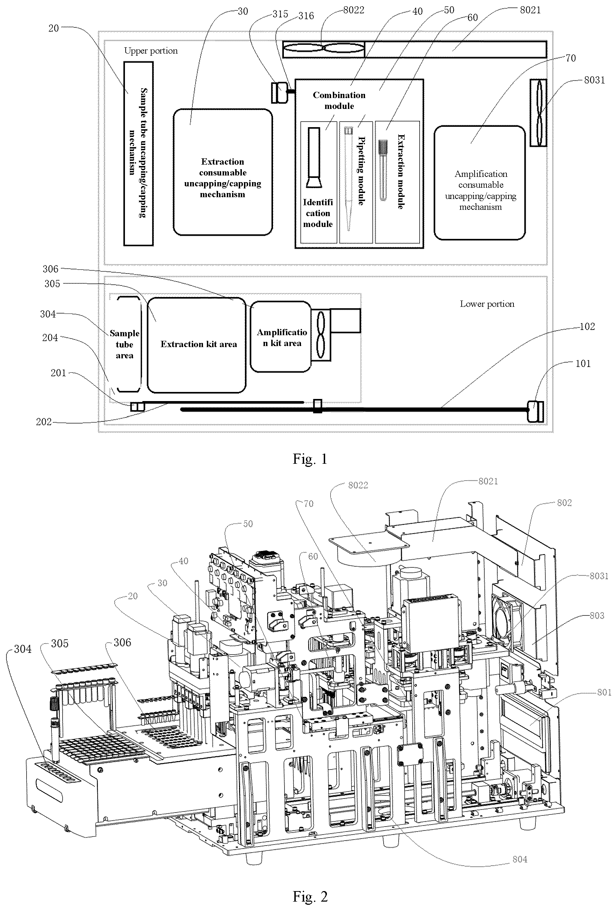

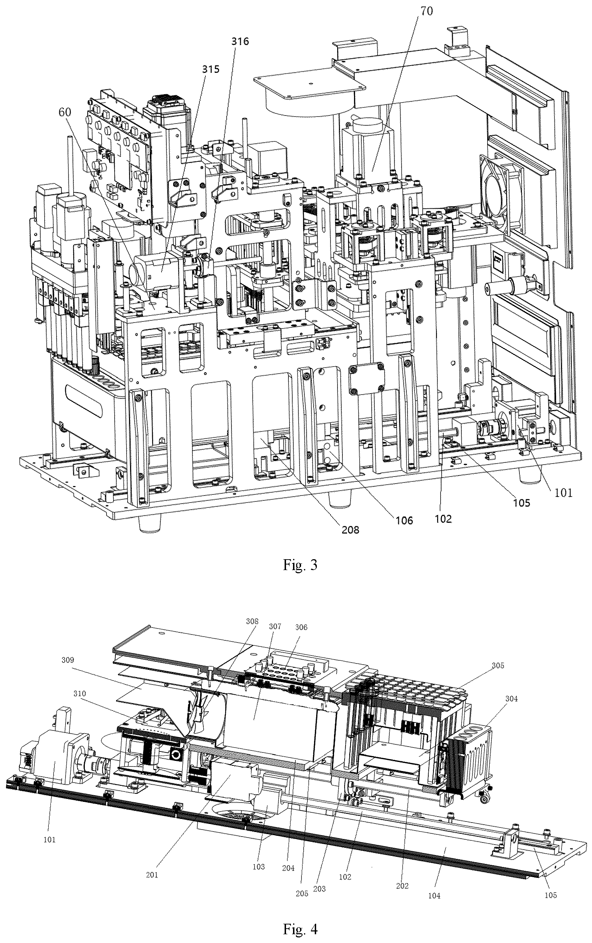

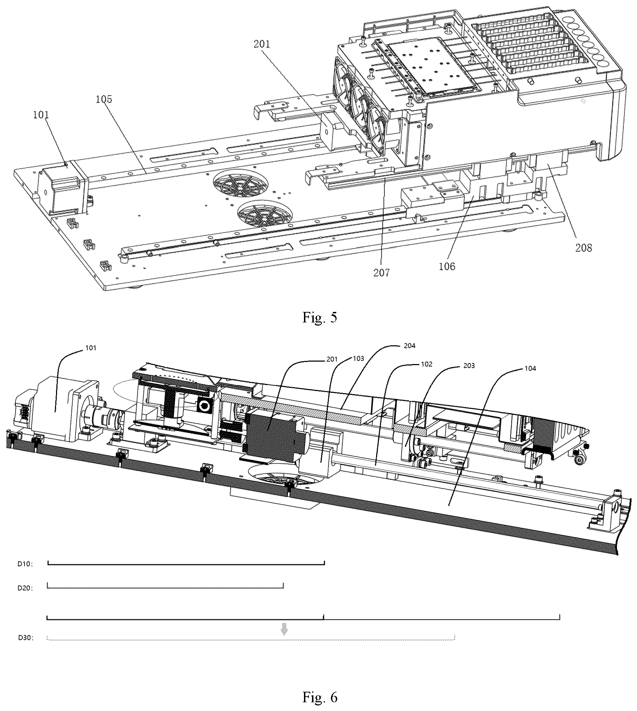

An all-in-one machine for sample testing, as shown in Fig. 1-47, comprising a casing 301, wherein the casing 301 internally comprises an upper portion and a lower portion; the upper portion comprises an upper driving unit and a combination module, the upper driving unit is configured to drive the combination module to move horizontally, and the combination module comprises a pipetting module 50 and an extraction module 60; the lower portion comprises a lower driving unit and a carrying platform 204, and an automated loading area 303 is arranged on the carrying platform 204; the automated loading area 303 comprises a sample tube area 304, an extraction kit area 305, and an amplification kit area 306, and the lower driving unit is configured to drive the carrying platform 204 to move horizontally; the time period during which the upper driving unit drives the combination module to move is a first time period, the time period during which the lower driving unit drives the carrying platform 204 to move is a second time period, and there exists an overlapping time period between the first time period and the second time period; the upper driving unit and the lower driving unit cooperate with each other to enable the pipetting module 50 to move between the sample tube area 304 and the extraction kit area 305 to perform sample liquid transfer operations, the extraction module 60 to move within the extraction kit area to perform sample extraction and purification operations, the pipetting module 50 to move between the extraction kit area 305 and the amplification kit area 306 to perform eluent transfer operations, and the pipetting module 50 to move within the amplification kit area 306 to perform solution dispensing operations.

The overlapping time period exceeds 50% of the shorter time period in the two time periods, which enables faster and more precise transfer of the sample liquid.

The upper driving unit drives the combination module with a first precision, and the combination module moves horizontally at a first speed under the action of the upper driving unit; the lower driving unit drives the carrying platform 204 to move horizontally at a second precision, and the carrying platform 204 moves horizontally at a second speed under the action of the lower driving unit; the first precision is higher than the second precision and the first speed is lower than the second speed, or the first precision is lower than the second precision and the first speed is higher than the second speed. The lower driving unit comprises a first motor 101 and a second motor 201; the first motor 101 can drive the carrying platform 204 to move within a first movement distance, and the second motor 201 can drive the carrying platform 204 to move within a second movement distance; the first motor 101 and the second motor 201 cooperate with each other to ensure that the movement distance of the carrying platform 204 does not exceed the sum of the first movement distance and the second movement distance; an opening and closing part 302 is provided on the casing 301; when the opening and closing part 302 is open, the first motor 101 and the second motor 201 can cooperate with each other to drive the carrying platform 204 to extend out of the casing 301, thereby completely exposing the automated loading area 303 in the carrying platform 204 beyond the casing 301 for loading and configuration operations. The automated loading area 303 comprises a sample tube area 304, an extraction kit area 305, and an amplification kit area 306, and the sample tube area 304, extraction kit area 305, and amplification kit area 306 are arranged in parallel in a straight line a parallel line along the direction of the opening and closing part 302, which can achieve more target testing in limited space and ensure high integration of the instrument. The automated loading area 303 can include several loading units arranged in parallel, illustrated here as 8, each of which includes a sample tube, an extraction kit, and an amplification kit. Through parallel loading units, multi-target and multiple testing of no more than 8 samples can be achieved. The sample tube is placed in the sample tube area 304 in a closed state, the extraction kits are placed in the extraction kit area 305 in a closed state, and the amplification kits are placed in the amplification kit area 306 in a closed state. This ensures that the loading process does not pose a risk of contamination to the operator and increases operational safety.

Specifically, the carrying platform 204 is connected to the first slider 103, so that when the first slider 103 moves along the length direction of the first lead screw 102, the first slider 103 can drive the carrying platform 204 to move along the length direction of the first lead screw 102; the first slider 103 can be sleeved on the first lead screw 102, and the first lead screw 102 is fixed on the first platform 104 through a bearing block; the first motor 101 is connected to the first lead screw 102 through a coupler and/or encoder; the first motor 101 rotates to drive the first lead screw 102 to rotate synchronously between the two bearing blocks, achieving precise movement of the first slider 103 on the first lead screw 102.

The first platform 104 can be provided with a first guide rail 105, and the slideway component 106 matches and connects the carrying platform 204 to the first guide rail 105; the slideway component 106 directly or indirectly connects the carrying platform 204 to the first slider 103, for example, they can be fixedly connected by a sheet-like connecting piece to drive the carrying platform 204 to move freely along the length direction of the first guide rail 105.

The second slider 203 can move along the length direction of the second lead screw, so that the maximum absolute movement distance of the second slider 203 exceeds the distance that the first slider 103 can move on the first lead screw 102 or the distance that the second slider 203 can move on the second lead screw 202, but does not exceed the sum of the two distances.

The second motor 201 can be provided at the bottom of the carrying platform 204, and a bearing block is provided at the bottom of the carrying platform 204 for fixing the second lead screw 202; the second motor 201 is driven by a pulley to the lead second screw 202, or the second motor 201 is driven by a gear to the second lead screw 202, so that the second motor 201 drives the second lead screw 202 to rotate at the bottom of the carrying platform 204, thereby enabling the second slider 203 sleeved on the second lead screw 202 to move accurately.

A sliding chamber 205 can be provided in the carrying platform 204 for the second slider 203 to move, and the second slider 203 is limited to be fixed in the sliding chamber 205; a second guide rail 207 is provided at the bottom of the carrying platform 204, and a slideway unit 208 that matches the second guide rail 207 is provided on the slideway component 106; the slideway unit 208 cooperates with the second guide rail 207 to provide guidance for the movement of the carrying platform 204, so that the second slider 203 moves along the length direction of the second lead screw 202; the second guide rail 207 of the carrying platform 204 and the slideway unit 208 move relative to each other in the length direction of the second guide rail 207; through the two second guide rails 207 and the two slideway units 208 arranged relative to each other, the carrying platform 204 can move stably under the drive of the second motor 201.

The control method for the first motor 101 and the second motor 201 can be to first start the first motor 101 and then start the second motor 201, that is, the first slider 103 first drives the carrying platform 204 to move to the first extreme distance, and then drives the carrying platform 204 to move to the preset extreme distance through the second slider 203 for control; the first motor 101 and the second motor 201 work in series to avoid adverse factors such as resonance or noise superposition when the two motors drive the same bearing platform at the same time.

The slideway component 106 realizes the relative moment driven by different driving units in series linkage with the same reference, ensuring higher design reliability. Specifically, when the first motor 101 drives the first slider 103 to move through the first lead screw 102, the slideway component 106 drives the entire carrying platform 204 to move along the length direction of the first guide rail 105 under the guidance of the first guide rail 105; when the second motor 201 drives the second slider 203 to move through the second lead screw 202, the movement state of the slideway unit 208 is the same as that of the slideway component 106; at this time, if the first motor 101 is not working, the slideway unit 208 is stationary, while the second slider 203 drives the second guide rail 207 of the carrying platform to move; in this way, two different driving mechanisms use the same slideway component 106 to achieve dual motor reliability series movement.

The first motor 101 on the first platform 104 can achieve free movement within a length range of, for example, D10 by driving the first slider 103 through the first lead screw 102. In practical implementation, due to positioning requirements, the actual movement range should be shorter than the entire length of the first slider 103 that the first lead screw 102 can support in theory; the actual position sensors such as photoelectric switches can be provided at predetermined positions; the second motor 201 received by the carrying platform 204 can achieve free movement within a length range of, for example, D20 by driving the second slider 203. Of course, the actual movement range of the second lead screw 202 is relatively short. Finally, the dual motor driving mechanism formed by combining the same slideway components 106 can achieve the maximum absolute movement distance of D30 that the second slider 203 can move, and the length exceeds the distance that the first slider 103 can move on the first lead screw 102 or the distance that the second slider 203 can move on the second lead screw 202, but does not exceed the sum of the two distances, ensuring dual motors achieves a larger movement distance range under the premise of stability and reliability.

The upper driving unit comprises a third motor 315 and a third lead screw 316.

The pitch of the third lead screw 316 is smaller than the pitch of the first lead screw 102 and/or the second lead screw 202 to ensure the accuracy requirements of the operation.

The upper portion further comprises a sample tube uncapping/capping mechanism 20, and the sample tube uncapping/capping mechanism 20 acts on the sample tube including a sample tube body and a sample cap; the sample tube uncapping/capping mechanism 20 comprises a cap screwing component for driving the sample cap to rotate relative to the sample tube body and to unscrew or screw from the sample tube body; a lifting component connected to the cap screwing component is used to drive the cap screwing component to perform at least vertical movement; the cap screwing component comprises a rotating head 2010 provided with an external thread structure, that can connect to the internal thread of the sample , and can rotate counterclockwise or clockwise to unscrew or screw the sample cap , thereby uncapping or capping the sample tube.

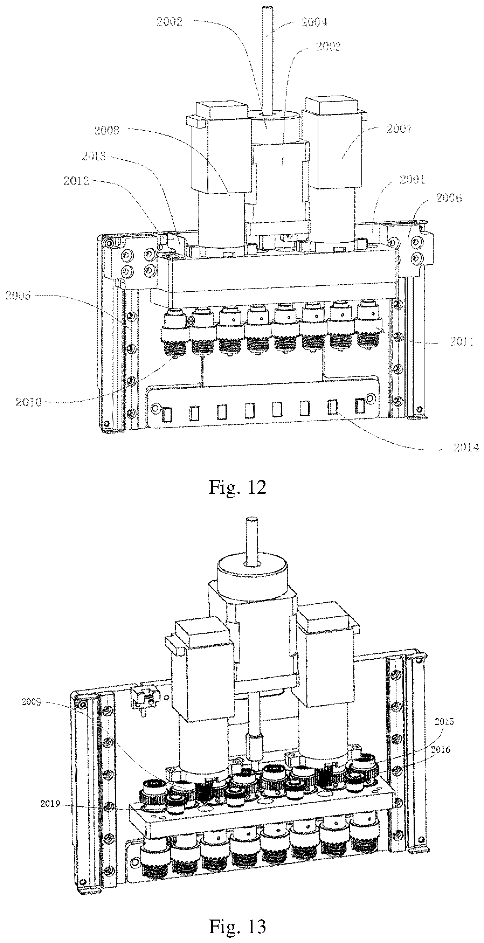

Specifically, as shown in Fig. 12. The lifting component comprises a lifting frame 2001, a lifting lead screw 2004, and a lifting driving part 2003. The lifting driving part 2003 is a first lifting motor, and the lifting driving part 2003 is fixed to the lifting frame 2001 through a motor installation base. The lifting lead screw 2004 is connected to the cover screwing component through the lifting driving part 2003. The lifting driving part 2003 drives the lifting lead screw 2004 to move the cap screwing component up and down, while cooperating with the rotational motion to achieve the uncapping/capping operation of the sample tube. The lifting driving part 2003 is also connected to a lifting encoder 2002, which is used to collect the rotating speed of the lifting driving part 2003 and feedback the signal to the controller (not shown) for precise control of the lifting speed of the cap screwing component. The lifting frame 2001 is also provided with vertical guide rails 2005 on both sides, and the cap screwing component is glidingly connected to the vertical guide rails 2005 through a cap screwing slider 2006. The lifting frame 2001 is also provided with a limiter 2012, and the cap screwing component is provided with a limit stopper 2013. The limiter 2012 is perpendicular to the limit stopper 2013 and is used to reset the cap screwing component before and after the start of movement; at the same time, the cap screwing component is limited in the rising process to prevent excessive movement of the lifting driving part 2003 from affecting normal operation. The limiter 2012 can be selected as a photoelectric switch. When the limit stopper 2013 contacts the limiter 2012, the signal can be transmitted to the controller to achieve control, which can accurately reach the set position. When it is necessary to uncap and cap the sample tube, the lifting driving part 2003 can be driven to operate, for example, clockwise. At this time, since the lifting driving part 2003 is fixed to the lifting frame 2001, the rotational movement of the lifting lead screw 2004 will be converted into the falling movement of the cap screwing component. During the process of uncapping and lifting, the lifting driving part 2003 can run counterclockwise, thus achieving at least vertical movement of the cap screwing component under the driving of the lifting driving part 2003 as a whole.

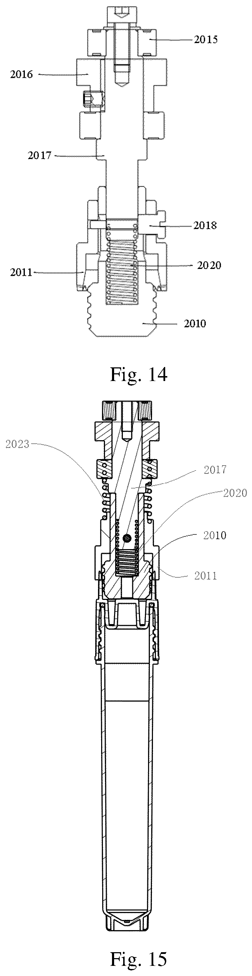

As shown in Figs. 13-15, the cap screwing component comprises a rotating structure and a rotating head 2010 sleeved on the rotating structure. The rotating structure comprises a cap screwing bearing 2015, a cap screwing linkage device 2016, and a cap screwing rotating shaft 2017 arranged in sequence from top to bottom. The cap screwing bearing 2015 is fixed to the top of the cap screwing rotating shaft 2017 by screws and gaskets. The cap screwing linkage device 2016 is a rotating shaft linkage gear, which is fixed to the middle end of the cap screwing rotating shaft 2017 by a top screw on the left end. The lower end of the cap screwing rotating shaft 2017 is fixed with a rotary sleeve 2011 and a rotating head 2010 by a limit pin 2018. The rotary sleeve 2011 is sleeved outside the rotating head 2010, and the rotating head 2010 is provided with a external thread for threaded connection to the sample cap. The rotating head 2010 cooperates with lifting and rotating movements to achieve the uncapping/capping operation of the sample tube. In order to prevent the sample cap from loosening from the rotating head 2010 after successful uncapping, the lower edge of the rotary sleeve 2011 is provided with a tooth groove that matches the skid-proof stripe of the sample cap. This tooth groove can be designed with small spacing fine tooth grooves or large spacing coarse tooth grooves. The sample cap is fixed by the upward force that causes the tooth groove of the rotary sleeve 2011 to clamp into the skid-proof stripe of the sample cap. The rotating head 2010 is internally provided with a cap screwing buffer piece 2020, and the cap screwing buffer piece 2020 is a spring that serves as a buffer to provide an opportunity for the rotating head 2010 to idle if it temporarily fails to match the sample cap groove thread. At the same time, it avoids damage caused by rigid pressure on the external threads of the rotating head 2010 or sample cap threads, until the rotating head 2010 is connected to the sample cap groove thread and screwed; at the same time, the lower edge of the rotary sleeve 2011 is clamped into the skid-proof stripe of the sample cap along the tooth groove to prevent the sample cap from loosening and detaching from the rotating head 2010 during the capping operation. In Fig. 15, the rotary sleeve 2011 can be elastically connected to the rotating shaft using a spring connecting piece 2023 directly or indirectly, thereby achieving flexible clamping of the rotary sleeve 2011 into the sample cap. This can minimize the wear of the rotary sleeve 2011 on the sample cap and minimize the risk of sample contamination caused by plastic shavings generated by scratching the sample cap. The basic functions of the remaining parts are similar to those in Fig. 14 and will not be repeated here.

In order to ensure efficient execution of uncapping/capping operations, the number of rotating heads 2010 is not unique. The corresponding figure in the present embodiment illustrates a scenario where the rotating heads 2010 are 8, achieving simultaneous uncapping/capping operations of 8 sample tubes. The rotating heads 2010 are directly or indirectly connected to the cap screwing rotating shaft 2017 and the cap screwing linkage device 2016. The cap screwing linkage devices 2016 of the 8 rotating heads 2010 are arranged in a row, and the rotary driving part 2007 is directly or indirectly meshed to the cap screwing linkage device 2016 through a rotary driving gear 2009 connected to the driving shaft. The rotary driving part 2007 outputs driving force, which can be arranged to directly rely on the rotary driving gear 2009 connected thereto to mesh with two cap screwing linkage devices 2016, thereby achieving the effect of directly driving two adjacent rotating heads 2010 to move synchronously. In order to ensure that each driving part in the system receives less torque, and greatly increase the reliability of the operation of the cap uncapping/capping device, there is no need to provide more precise and higher strength transmission components. The rotary driving part 2007 consists of two rotary motors, both of which jointly output the power to uncap the cap screwing component. In this way, the two rotary driving parts 2007 can directly drive the four rotating heads 2010 to move synchronously, ensuring that each rotary motor in the system receives less torque, greatly increasing the reliability of the operation of the sample tube uncapping/capping mechanism, and there is no need to provide more precise and higher strength transmission components. The rotating structure also comprises a rotary transmission gear 2019, and the rotary transmission gear 2019 is provided between the cap screwing linkage devices 2016, so as to synchronize the remaining four cap screwing cover linkage devices 2016 that are not directly meshed with the rotary driving gear 2009. This achieves the synchronous rotation effect of all eight rotating heads 2010 running in the same direction and rotating speed at the same time under the driving of the rotary driving part 2007, ensuring that multiple sample tubes can be reliably uncapped and capped at the same time. It can also adapt to the synchronous uncapping/capping operation of multiple sample tubes obtained in mass production with only slight differences, and with the help of the elastic body allowing for idle operation, it ensures the reliability of batch operation. In order to reduce the rotating speed and increase the torque to meet the needs of rotational work, the output shaft of the rotary driving part 2007 is connected to a rotary reducer 2008. The output shaft of the rotary reducer 2008 is directly or indirectly meshed with the cap screwing linkage device 2016 and/or the rotary transmission gear 2019 through a rotary driving gear 2009. In the present embodiment, the gear box loaded with the rotating structure, the cap screwing slider 2006, and the limit stopper 2013 can be integrated. In order to test the execution of the uncapping/capping operation, the lifting frame 2001 is also provided with a sensor 2014, and the sensor 2014 is arranged horizontally over against the rotating head 2010. It is used to test whether the rotating head 2010 is screwed to the sample cap and whether the sample cap is screwed to the sample tube body during the rising process after uncapping; whether the rotating head 2010 is crewed to the sample cap during the resetting process after capping. In the present embodiment, the sensors 2014 can be photoelectric sensors, with the number corresponding to the number of rotating heads 2010. Several sensors 2014 are arranged in a row and fixed to the lifting frame 2001 by screws and connected to the controller, and the collected signals are fed back to the controller.

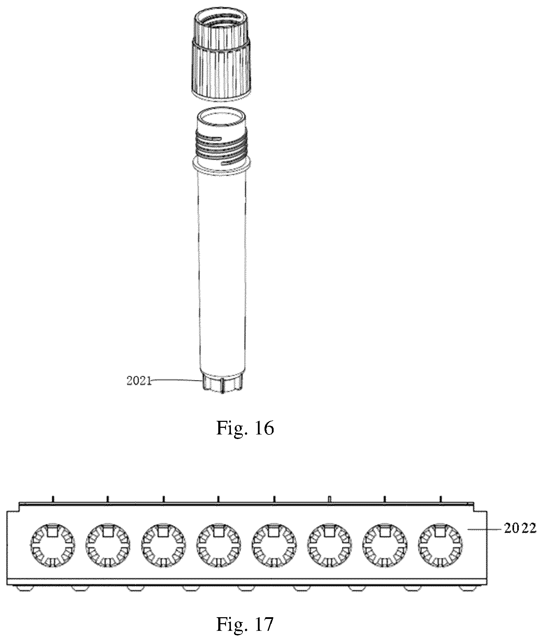

Fig. 16 illustrates a sample tube, the sample tube body of which can include identification codes such as barcodes, QR codes, FRIDs, for object information acquisition and experimental database establishment functions. The workflow is illustrated using commonly used testing sample tubes as an example. The sample tube comprises a sample tube body and a sample cap. A tube body base 2021 is arranged at the bottom of the sample tube body, and the sample tube body is screwed to the sample cap; a groove is arranged at the upper end of the sample cap, and the groove is provided with an internal thread screwed to the rotating head 2010. Of course, this internal thread can also serve as a connecting part for a rotating shaft or auxiliary robotic arm during the production process of the sample cap. The screwing direction between the sample cap and the sample tube body is opposite to that between the sample cap and the rotating head 2010, so that the rotating head 2010 can rotate in the same direction after screwing the sample cap to achieve the unscrewing of the sample cap and the sample tube body. It is also suitable for the screwing and capping process, and can reliably achieve the capping or uncapping of the sample tube through rotation in different directions. The sample tube is loaded onto the sample tube support 2022 as shown in Fig. 17. The bottom of the sample tube support 2022 is provided with a loading hole that matches the tube body base 2021 for fixing the sample tube body. Of course, a convex carrying part that matches the tube body base 2021 can be further provided on the sample tube support 2022, so that the sample tube can be fixed during the uncapping/capping process, ensuring the reliability of the uncapping/capping. Furthermore, sensors, such as photoelectric or mechanical sensors, can be installed inside the sample tube support 2022 to indicate whether the sample tube is correctly installed in place. Of course, it can also include elastic fixing elements to adapt to the fixing of sample tubes with different diameters.

The following is a detailed explanation of the operation process for uncapping/capping the sample tube cap. Before the experiment begins, the operator inserts the sample tube in the closed state into the loading hole of the sample tube support 2022, and pushes the sample tube support 2022 into the sample bin from the entrance of the sample bin. Preferably, the sample tube support 2022 is fixedly connected to the carrying platform 204 to form the sample tube area 304. Only the sample tube in the closed state needs to be inserted into the sample tube area 304. The process of adding sample tubes and pushing in can also be fully automated. When the sample tube is inserted into the corresponding loading hole, the sensor can indicate whether the sample is loaded correctly and transmit the corresponding signal to the controller, allowing the machine to operate in saturation or non saturation.

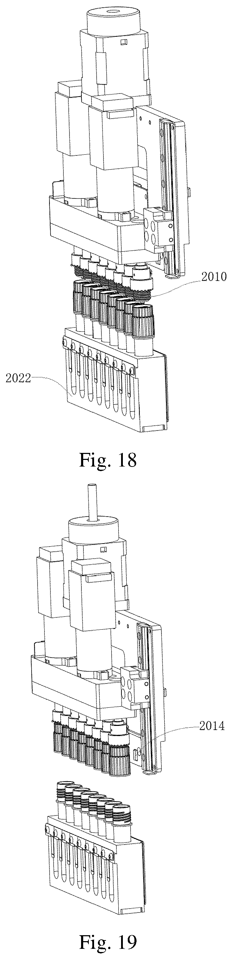

At the beginning of the experiment, as shown in Fig. 18, when the sample tube support 2022 is driven horizontally to the designated position, the rotating head 2010 is perpendicular to the sample cap. The lifting driving part 2003 is powered on to drive the lifting lead screw 2004, which drives the cap screwing component to fall along the vertical guide rail 2005. When the rotating head 2010 falls to contact the sample cap or has a predetermined gap of 0-10mm from the top of the sample cap, the rotary driving part 2007 drives the rotary driving gear 2009 to rotate the cap screwing linkage device 2016 directly or indirectly connected thereto. The rotary transmission gear 2019 is driven to rotate, causing all 8 cap screwing linkage devices 2016 to rotate and driving the rotating head 2010, which is sleeved on the cap screwing rotating shaft 2017, to rotate counterclockwise while falling until the rotating head 2010 is screwed to the sample cap groove. Due to the provision of a cap screwing buffer piece 2020 inside the rotating head 2010, when one of the rotating heads 2010 fails to match the thread of the sample cap groove, the rotating head 2010 is allowed to idle for several turns until it is screwed to the sample cap groove. When some sample tubes have been correctly connected, the sample caps that are not connected in place continue to be connected in place through the continued rotary drive of the rotary driving part 2007. At this time, the correctly connected sample caps can experience a similar slipping state under the action of the cap screwing buffer piece 2020, ensuring that each rotating head 2010 can be reliably and properly connected. Since the tube body base 2021 of the sample tube body is fixed in the loading hole of the sample tube support 2022, the sample tube body will not rotate together with the sample cap. Due to the fact that the spirals of the sample cap are in an opposite direction to those of the sample tube body and the rotating head 2010, as shown in Fig. 19, the sample cap continues to rotate counterclockwise until it disengages from the sample tube body. The cap screwing component in Fig. 19 is of a flexible connection structure as shown in Fig. 15, which means that the rotary sleeve 2011 is not fixedly connected to the cap screwing rotating shaft 2017 by pins, but connected elastically and glidingly, to ensure that the rotary sleeve 2011 does not cause excessive scratches on the sample cap. Furthermore, the rotating head 2010 also includes a clamping structure 2024 for the sample cap, which can clamp the sample cap threaded to the rotating head 2010. The clamping structure 2024 includes an elastic body and a segmented body directly or indirectly connected thereto. When the rotating head 2010 is connected to the sample cap, the segmented body can be at least partially in contact with the sample cap, achieving a clamping effect on the sample cap. The segmental body can be a ball bead, a cylindrical bead, a conical bead, a hollow shaped bead, etc. Through the provision of this clamping structure 2024, on the one hand, it can clamp the sample cap reliably by mechanical force (where the elastic body can be an element such as a spring piece, which can provide the clamping force of the segmented body on the sample cap), and even under the condition of uncapping failure, it will not cause the system to be unable to cap, and the risk of the sample cap falling off directly without reliable connection, ensuring the reliable connection between the rotating head 2010 and the sample cap during the uncapping process. On the other hand, it can guide to straighten the sample cap, thereby achieving a reliable and unbiased connection between the rotating head 2010 and the sample cap. After the complete separation of the sample tube and sample cap, the rotary driving part 2007 can stop rotating, while the lifting driving part 2003 drives the lifting lead screw 2004 to drive the cap screwing component to rise along the vertical guide rail 2005. When it rises to the first set position (as shown in Fig. 19), the sensor 2014 emits light that is reflected by the sample cap and receives and feeds back a signal to the controller. The experiment continues; if one of the sensors 2014 cannot receive the reflected light, it is determined that the uncapping has failed, and a feedback signal is sent to the controller to remind the operator to stop the experiment or to perform another uncapping step on their own to try uncapping the sample cap again. When there is no information of uncapping failure, the cap screwing component continues to rise to the second set position. If the sample tube body is lifted along with the sample cap, the sensor 2014 emits light that is reflected by the sample tube and received by the controller, reminding the operator of uncapping failure; if the operation is normal, when the cap screwing component continues to rise to the limit stopper 2013 and triggers the limiter 2012, the sample tube uncapping/capping mechanism stops working, and the uncapping process ends. At this time, the sample cap is screwed onto the rotating head 2010, and the sample tube support 2022 can carry the sample tube without a cap to other positions to complete pipetting or other experimental operations, thus achieving full utilization of the internal threads of the sample cap itself.

After completing the corresponding operation, the capping operation steps can be executed. At this time, all sample tubes are in uncapped states, and the tube body base 2021 of the sample tube body is inserted into the loading hole of the sample tube support 2022. When the sample tube support 2022 moves horizontally to the designated position, the sample cap is perpendicular to the sample tube body. The lifting driving part 2003 is powered on to drive the lifting lead screw 2004, which drives the cap screwing component to fall along the vertical guide rail 2005. When the sample cap falls to contact the sample tube body, the rotary driving part 2007 drives the rotary transmission gear 2019 to rotate. The rotary transmission gear 2019 drives the gear set meshed thereto to rotate, thereby driving the rotating head 2010 sleeved on the cap screwing rotating shaft 2017, to rotate clockwise while falling until the sample cap is screwed to the sample tube body. Due to the provision of a cap screwing buffer piece 2020 inside the rotating head 2010, the skid-proof stripe on the outer edge of the sample cap is forced to clamp into the tooth groove of the rotary sleeve 2011 by an upward reaction force, preventing the sample cap from loosening. Since the sample cap is screwed to the sample tube body and the rotating head 2010 in opposite directions, and the sample tube body is fixed without rotating together with the sample cap, when continuing to rotate clockwise, the sample cap is tightly attached to the sample tube body and detached from the rotating head 2010. The lifting driving part 2003 drives the lifting lead screw 2004 to drive the cap screwing component to rise along the vertical guide rail 2005. When rising to the first set position, if the sample cap is lifted along with the rotating head 2010, the sensor 2014 emits light that is reflected by the sample cap and feeds back a signal to the controller, reminding the operator of capping failure. The sample tube uncapping/capping mechanism 20 can also attempt to cap again; if the operation is normal, when the cap screwing component continues to rise to the limit stopper 2013 and triggers the limiter 2012, the sample tube uncapping/capping mechanism 20 stops working and the capping process ends.

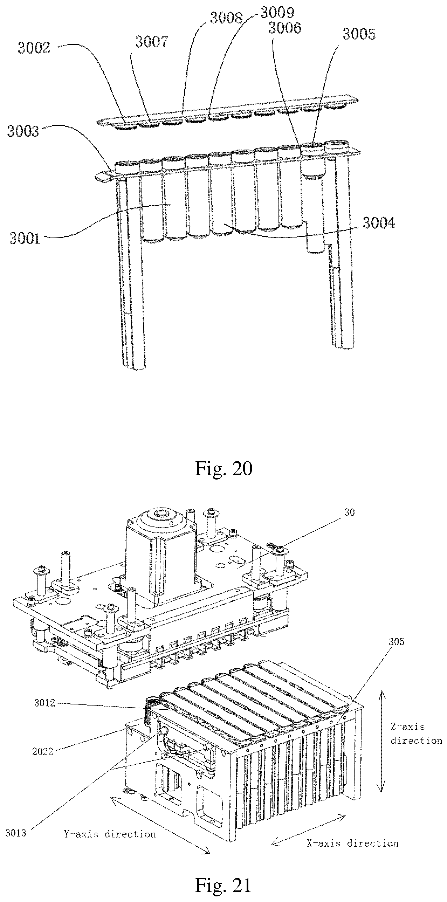

The upper portion also comprises an extraction kit uncapping/capping mechanism 30, and the extraction kit uncapping/capping mechanism 30 acts on the extraction kits including the extraction kit body 3001 and the extraction kit cap 3002, as shown in Fig. 20. The extraction kit body 3001 comprises an extraction kit connecting plate 3003 and several extraction tube bodies 3004 inserted into the extraction kit connecting plate 3003. The extraction tube bodies 3004 have extraction tube openings 3005, and all extraction tube openings 3005 of the extraction tube bodies 3004 are in the same plane. The width of the extraction kit connecting plate 3003 is greater than the diameter of the extraction tube opening 3005 to form a first flange 3004 on the outer side wall of the extraction tube body 3004 for fixing the extraction tube body 3004 when uncapping; the extraction kit cap 3002 comprises several extraction tube caps 3007 in one-to-one correspondence with the extraction tube body 3004 to block the extraction tube opening 3005, connected to the same side of the tube cap plate 3008. The edge of the extraction tube cap 3007 is provided with a second flange 3009 as a force point when the extraction tube cap 3007 is pulled out from the extraction tube body 3004; when the extraction tube cap 3007 is capped to the extraction tube body 3004, a gap is formed between the second flange 3009 and the first flange 3006, which facilitates the insertion of the extraction kit uncapping/capping mechanism 30 through this gap, thereby achieving the uncapping operation. The extraction kit body 3001 is loaded in the extraction kit slot 3012 of the extraction kit area 305.

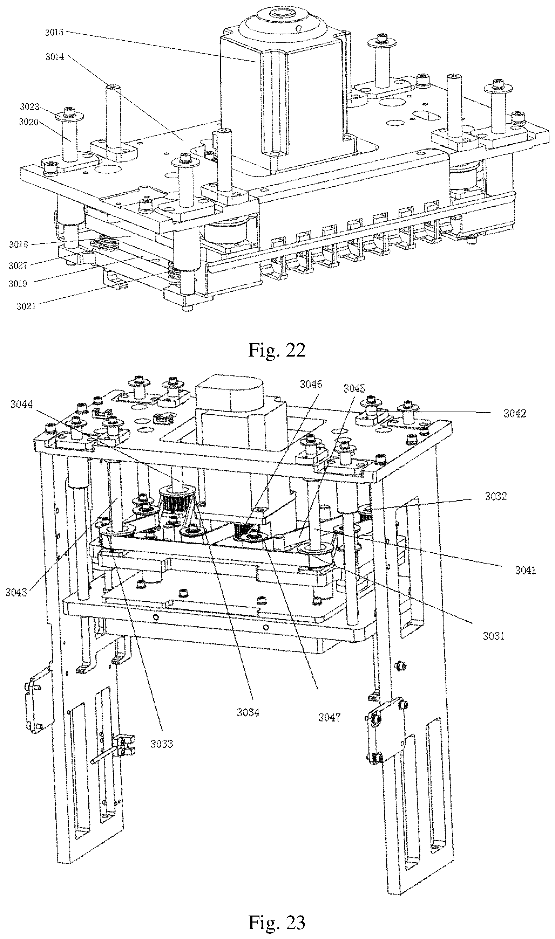

As shown in Fig. 22, the extraction kit uncapping/capping mechanism 30 comprises a first working layer 3014, a second working layer 3018, and a third working layer 3019 arranged in sequence from top to bottom; there are several first guide rods 3020 vertically arranged below the first working layer 3014. The upper end of the first guide rod 3020 is connected to the first working layer 3014, and the lower end of the first guide rod 3020 penetrates the third working layer 3019, allowing the third working layer 3019 to move up and down along the first guide rod 3020.

The second working layer is provided with an extraction kit cap fixing mechanism 3010, and the extraction kit cap fixing mechanism 3010 is used to fix the extraction kit cap on the second working layer;
the third working layer can cooperate with the extraction kit body, and the extraction kit body fixing mechanism 3011 arranged on the third working layer can provide support for the extraction kit body during the process of uncapping or capping the extraction kit cap.

Specifically, in the present embodiment, the X axis, Y axis, and Z axis are the directions as shown in Fig. 21. The extraction kit slot 3012, the extraction kit cap fixing mechanism 3010, and the extraction kit body fixing mechanism 3011 all extend along the Y axis and are arranged in parallel with equal interval along the X axis. The entrance end of the extraction kit uncapping/capping mechanism 30 is at the front opening position of the extraction kit cap fixing mechanism 3010 and the extraction kit body fixing mechanism 3011; and the extraction kit area 305 can be driven to move along the Y axis, in conjunction with the up and down movement of the extraction kit uncapping/capping mechanism 30, to achieve the uncapping/capping operation of the extraction kits. Fig. 21 shows the specific structure of the extraction kit area 305, where the sample tube support 2022 is arranged along the Y axis upstream of the extraction kit slot 3012 in the uncapping direction. The extraction kit area 305 includes a fixed bolt 3013 for defining the extraction kit uncapping/capping mechanism 30, which can mechanically ensure the reliable cooperation between the extraction kit uncapping/capping mechanism 30 and the extraction kit area 305 during the uncapping/capping operation.

The upper end of the first guide rod 3020 is provided with a first guide rod upper limit block 3023 at the extreme position of the first guide rod; the first guide rod upper limit block 3023 is located above the first working layer 3014.

There are several second guide rods 3027 vertically arranged between the second working layer 3018 and the third working layer 3019; the upper end of the second guide rod 3027 penetrates the second working layer 3018, and the lower end of the second guide rod 3027 is connected to the third working layer 3019. The upper end of the second guide rod 3027 is provided with a second guide rod upper limit block, and the second guide rod upper limit block is located above the second working layer 3018.

The second guide rod 3027 is sleeved with an elastic component 3021, and the elastic component 3021 is located between the second working layer 3018 and the third working layer 3019; the first working layer 3014 is directly or indirectly connected to the framework structure of the entire device, and the second lifting motor 3015 is directly or indirectly connected to the second working layer 3018. The second lifting motor 3015 is used to drive the second working layer 3018 to move up and down along the first guide rod 3020.

As shown in Fig. 23, in the present embodiment, the second lifting motor 3015 can drive several synchronous operation units directly or indirectly connected to the second working layer 3018 to operate, realizing that the operating units can apply driving force to the second working layer 3018 to move up and down along the vertical direction at multiple points simultaneously. The present embodiment selects four operating units, including a first extraction kit uncapping/capping lead screw 3041, a second extraction kit uncapping/capping lead screw 3042, a third extraction kit uncapping/capping lead screw 3043, and a fourth extraction kit uncapping/capping lead screw 3044; as well as a first pulley 3031, a second pulley 3032, a third pulley 3033, a fourth pulley 3034, and uncapping/capping conveyor belt 3045 cooperating therewith; the first extraction kit uncapping/capping lead screw 3041 is sleeved in the first pulley 3031, and the second extraction kit uncapping/capping lead screw 3042 is sleeved in the second pulley 3032; the third extraction kit uncapping/capping lead screw 3043 is sleeved in the third pulley 3033; the fourth extraction kit uncapping/capping lead screw 3044 is sleeved in the fourth pulley 3034; the first pulley 3031, the second pulley 3032, the third pulley 3033, and the fourth pulley 3034 are evenly arranged on the second working layer 3018.

The second lifting motor 3015 is fixedly installed on the second working layer 3018, and a through slot for the second lifting motor 3015 to penetrate is provided in the first working layer 3014; the output end of the second lifting motor 3015 is provided with an output pulley 3046, and the uncapping/capping conveyor belt 3045 connects the first pulley 3031, the second pulley 3032, the third pulley 3033, the fourth pulley 3034, and the output pulley 3046 as a whole.

A training wheel 3047 is provided on the second working layer 3018 for tensioning and guiding the uncapping/capping conveyor belt 3045. The uncapping/capping conveyor belt 3045 is guided by the training wheel 3047, which increases the contact area between the uncapping/capping conveyor belt 3045 and each pulley, making power transmission more stable.

The mating relationship between the first extraction kit uncapping/capping lead screw 3041 and the first pulley 3031 is the same as that of other lead screw pulleys. Here, the mating relationship between the first extraction kit uncapping/capping lead screw 3041 and the first pulley 3031 is used as an explanation; the upper end of the first extraction kit uncapping/capping lead screw 3041 is fixedly connected to the first working layer 3014, and the lower end of the first extraction kit uncapping/capping lead screw 3041 penetrates the second working layer 3018. The first pulley 3031 is threaded to the first extraction kit uncapping/capping lead screw 3041, and is driven to rotate by the rotation of the second lifting motor 3015, so that the first pulley 3031 runs along the length direction of the first extraction kit uncapping/capping lead screw 3041, thereby driving the up and down movement of the entire second working layer 3018.

Similarly, the second pulley 3032 functions with the second extraction kit uncapping/capping lead screw 3042; the third pulley 3033 functions with the third extraction kit uncapping/capping lead screw 3043; the fourth pulley 3034 functions with the fourth extraction kit uncapping/capping lead screw 3044, thereby achieving the effect of a motor driving four lead screws to synchronously operate and drive the second working layer 3018 to press uniformly without deviation. Of course, the structure of the conveyor belt pulley transmission mechanism described above, which drives four or other numbers of lead screws to press synchronously, can be achieved through meshed gear pairs for transmission, and is not limited here.

A gland part 3050 is provided on the second working layer 3018 for applying pressing force to the extraction kit cap.

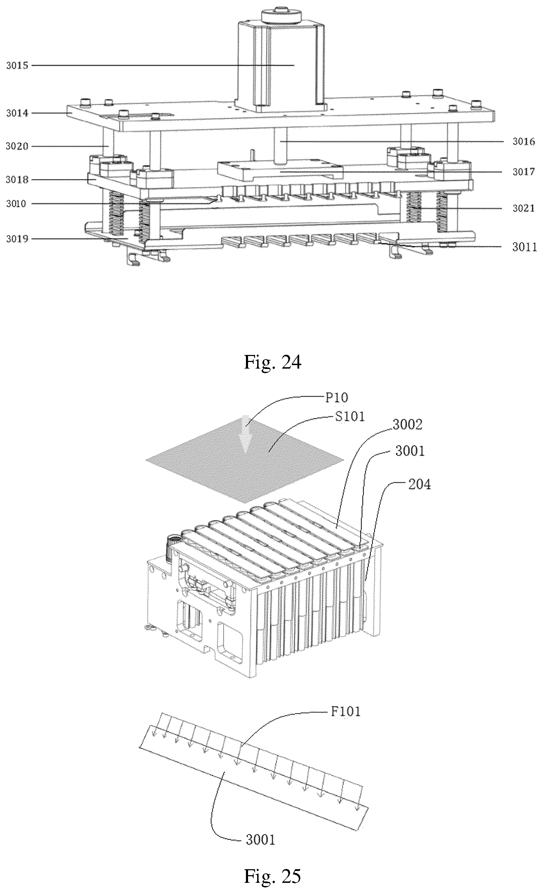

Fig. 25 is a schematic diagram of the extraction kit capping principle in the traditional solution. The pressing force P10 is converted from the maximum output power of the second lifting motor 3015. The gland part 3050 can be simplified into a face type pressing part S101 with a certain action area. The face type pressing part S101 can be connected or contacted with the integrated extraction kit cap 3002 under the action of the second lifting motor 3015, so that the pressing force P10 acts on the integrated extraction kit cap 3002 to perform the capping operation. The extraction kit body 3001 to be capped is placed on the carrying platform 204, and under the action of the pressing force P10, the integrated extraction kit cap 3002 can be fastened on the extraction kit body 3001. Due to the large area of force applied throughout the entire pressing process, the magnitude of the average face type pressing force F101 acting on the local area can be illustrated as the result in Fig. 25, where the actual force is relatively small. However, the extraction kits require certain sealing reliability, so the sealing is generally achieved by elastic or plastic deformation of materials with certain interference or deformation to a certain extent. Some also use the fitting of raised and recessed parts to achieve the sealing. These sealing methods actually have a large requirement for the pressing force of the two to overcome the resistance during the connection process between the extraction kit cap 3002 and the extraction kit body 3001. However, the local pressing force converted by the existing extraction kit capping method is not large. Therefore, in actual experiments, it has been found that most extraction kits have not been completely and reliably capped. Once the solution in Fig. 25 is truly used in the all-in-one machine, there may be a risk of leakage of used sample liquid leading to contamination, which is not allowed or acceptable in medical devices involving biological experiments

In order to overcome the above problems, the present embodiment proposes that the pressing unit 3051 is included in the pressing part 3050, and the pressing unit 3051 applies a pressing force to the extraction kit cap 3002; the capping driving unit 3060 drives the gland part 3050 to be in different states, achieving the connection or separation between the pressing unit 3051 and the extraction kit cap 3002 to be capped. When the pressing unit 3051 is driven to be connected to the extraction kit cap 3002, the pressing unit 3051 and the extraction kit cap 3002 are in a partially connected state, thereby applying a pressing force to part of the extraction kit cap 3002; the relative movement driving part causes relative movement between the extraction kit cap 3002 and the gland part 3050, and in the relative movement generated by the two, the entire extraction kit cap 3002 is pressed and connected to the extraction kit body 3001 to be capped. The relative movement driving part is contained in the carrying platform 204. The pressing unit 3051 is a rotary roller structure. When the extraction kit cap 3002 is partially connected to the pressing unit 3051 to apply pressing force to the partial area of the extraction kit cap 3002, the partial connection type is in form of line contact.

The number of pressing units 3051 can be set as needed. In the present embodiment, eight pressing units 3051 are selected to achieve simultaneous capping of no more than eight extraction kit caps 3002.

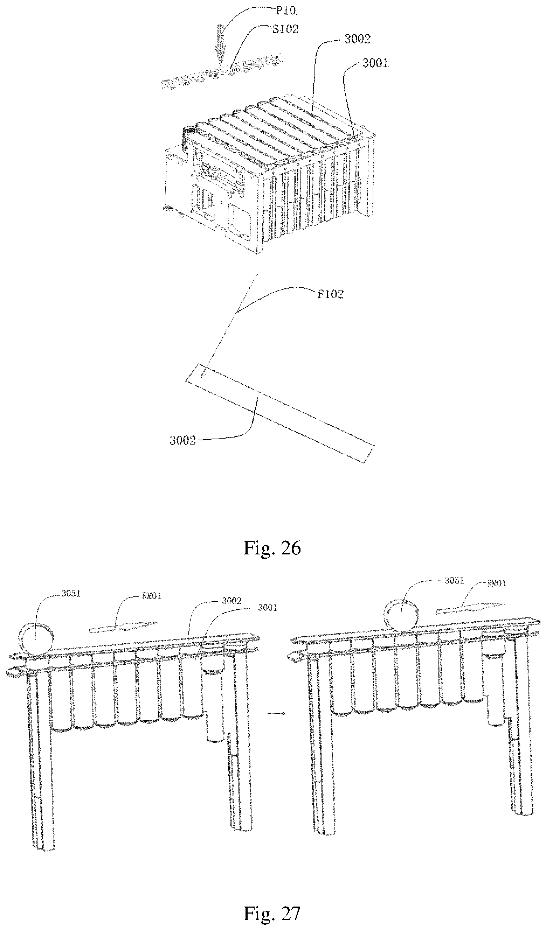

Fig. 26 is a schematic diagram of the extraction kit capping principle in the present invention. Since the second lifting motor 3015 has not changed, the pressing force P10 converted by the maximum power output of the motor here remains unchanged. At this time, the gland part 3050 can be simplified as the structure of the line type pressing part S102 according to the action force. Under the action of the second lifting motor 3015, the line type pressing part S102 can be directly or indirectly connected to the extraction kit cap 3002 to be capped through the pressing unit 3051, realizing the application of the pressing force to the extraction kit cap 3002. At this time, it can be concluded from the figure that it is partially connected to the extraction kit cap 3002, thus applying the pressing force to some areas of the extraction kit cap 3002. Comparing with Fig. 26, it can be clearly seen that the value of the line type pressing force F102 applied to the local cap body is much greater than the face type pressing force F101 applied to the same position. Therefore, this design can provide sufficient closing pressing force to overcome the resistance during the capping process, thereby achieving reliable local capping.

Fig. 27 shows a schematic diagram of the entire process of reliable capping using the large pressing force of local contact and relative movement. Under the cooperation of the second lifting motor 3015, the pressing unit 3051 and the extraction kit cap 3002 are partially in contact, preferably the two are in form of line contact type rather than the face contact type in Fig. 25. Therefore, a relatively large pressing force can be applied to the local area, ensuring the reliable connection between the integrated extraction kit cap 3002 and the extraction kit body 3001. The integrated extraction kit cap 3002 here can be made of plastic with a certain hardness (or elastic-plastic), and only applying local pressing force will not cause the integrated extraction kit cap 3002 to have breakage or other phenomena. The pressing unit 3051 can be provided as a roller structure, and thus the pressing unit 3051 applies pressing force to a partial area of the extraction kit cap 3002. When the extraction kit cap 3002 is partially connected to the pressing unit 3051, and a pressing force is applied to a partial area of the extraction kit cap 3002, the partial connection type is in form of line contact, which can generate sufficient pressing force. At this time, under the action of relative movement RM01, the roller can roll from the integrated extraction kit cap 3002 to all positions of the extraction kit cap 3002. Fig. 27 illustrates the reliable connection process between the extraction kit cap 3002 and the extraction kit body 3001 by coordinating the roller structure with relative movement RM01. The use of a roller structure can ensure that there is rolling friction between the pressing unit 3051 and the integrated extraction kit cap 3002 under the action of relative movement during the capping process, reducing the risk of wear and deformation of the pressing unit 3051, while also ensuring the reliability of the capping process, and minimizing the risk of capping failure caused by dislocations from sliding friction. Of course, in special scenarios, non-roller solutions can also be used, which are not limited here.

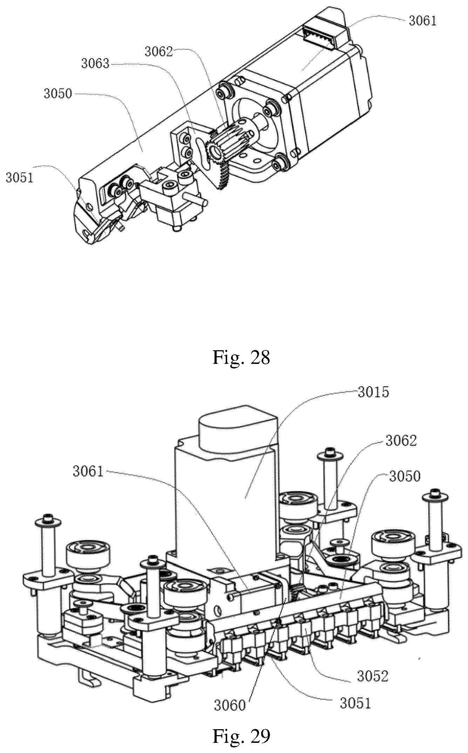

Fig. 28 illustrates the implementation scheme of the capping driving unit 3060, and the capping driving unit 3060 can drive the gland part 3050 to be in different states, realizing the driving during the connection or separation between the pressing unit 3051 and the extraction kit cap 3002 to be capped in different states. In the present embodiment, the capping driving unit 3060 comprises a gland driving motor 3061 for outputting driving force for switching in different states. It drives the gland gear 3062 connected to the gland driving motor 3061 to rotate through the output shaft. The gland gear 3062 is meshed with the sector output gear 3063, and the two achieve effortless output through a configured modulus ratio. The sector output gear 3063 is fixed on the gland part 3050 to achieve reliable locking force output from the capping driving unit 3060 to the gland part 3050. The middle of the gland part 3050 is hinged to achieve pendular rotation. The sector output gear 3063 drives the hinged gland part 3050 to swing up or down, realizing the connection or separation between the pressing unit 3051 and the extraction kit cap 3002. Of course, in the separated state, only the gland driving motor 3061 needs to reverse to remove the locking state. In order to implement the previous capping scheme by rolling compression, the present embodiment adopts the design of the pressing unit 3051 as a roller structure. In order to ensure that the equipment meets the requirements of efficient operation, the pressing unit 3051 here is set as eight parallel roller structure. The roller structure is installed on the roller frame 3052 inside the gland part, and each adjacent roller can have a similar spacing therebetween.

As shown in Fig.29, the second lifting motor 3015 can adjust the position of the second working layer 3018, and can also convert its output power into pressing force. Of course, in some cases, it can be combined with the gland driving motor 3061 in Fig. 28 to output the pressing force, or it can be converted solely from the output power of the gland driving motor 3061 to obtain the pressing force. This is not limited here. In conjunction with the second lifting motor 3015, the gland driving motor 3061 can switch states, causing the gland gear 3062 to rotate and achieve the gland part 3050 to be pressed down and locked, thereby directly or indirectly connecting the pressing unit 3051 to the extraction kit cap 3002. Local application of pressing force enables reliable connection between the extraction kit cap 3002 and the extraction kit body 3001 at the local position under the action of greater pressing force.

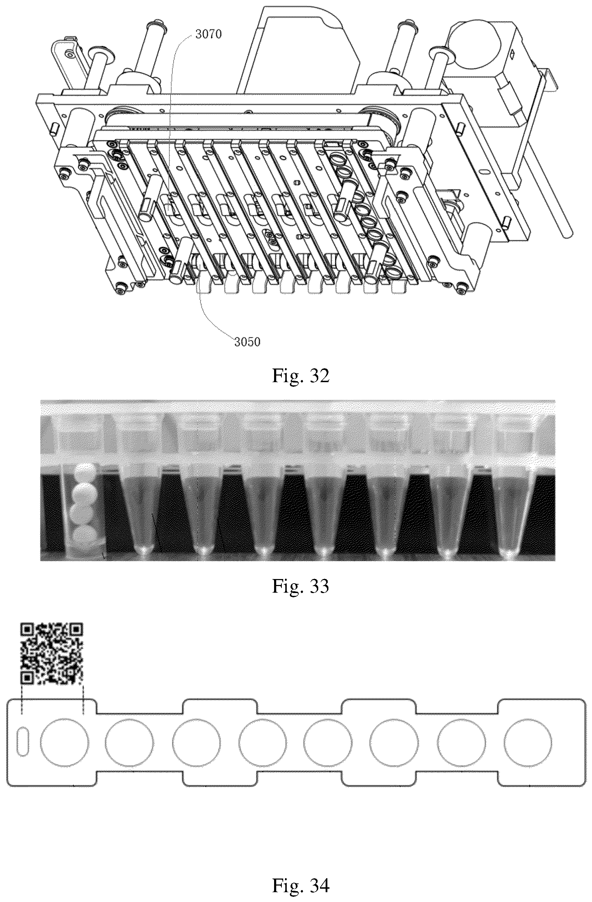

Fig. 32 is a schematic diagram of the second working layer 3018 provided with an elastic unit 3070, comprising an extraction kit cap fixing mechanism 3010. The extraction kit cap fixing mechanism 3010 comprises an elastic unit 3070, which is used to ensure that the extraction kit cap 3002 is elastically clamped without dislocation during the capping process of the gland part 3050. After the integrated extraction kit cap 3002 is uncapped, the extraction kit cap 3002 directly presses the elastic unit 3070 to clamp it. It only needs to ensure that the uncapping/capping is executed in the same position to ensure the correct connection between the extraction kit cap 3002 and the extraction kit body 3001, ensuring the simple and low-cost implementation of the structure. The elastic unit 3070 and the gland part 3050 are arranged at different positions with a predetermined distance therebetween. The elastic unit 3070 is preferably arranged at the center or near the center, while the gland part 3050 is arranged at the edge position. The relative movement driving part is included in the carrying platform 204, so that the gland part 3050 of the present invention does not need to be driven anymore, ensuring the simplicity of the extraction kit uncapping/capping mechanism 30. Since the carrying platform 204 itself needs to be in different positions to perform operations such as pipetting, extraction, and amplification, the same lower driving unit can also be used to achieve driving of relative movement. This simplifies the design of moving parts and ensures the reliability of the system.

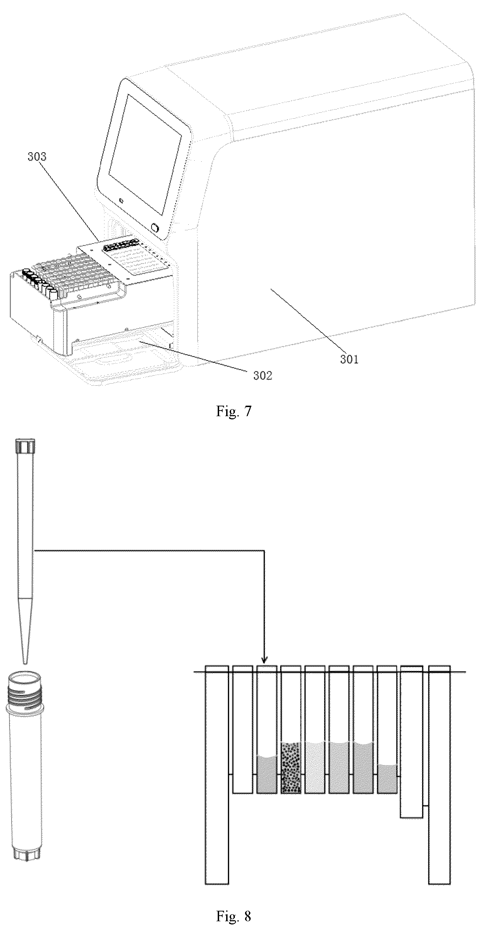

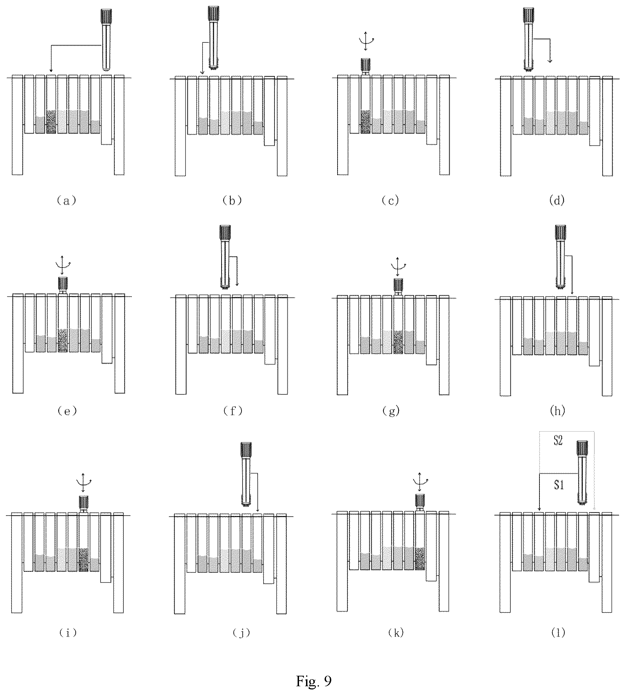

The extraction kit is a 10-well connecting tube kit, which is configured with a first pipetting tip well, a reserved well, a lysis well, a magnetic bead storage well, a washing A well, a washing B well, a washing C well, an elution well, a magnetic rod cover 5006 well, and a second pipetting tip well from near to far relative to the sample tube. The washing solution in the washing A well can be 600-700µL, the washing solution in the washing B well can be 650µL-750µL, the washing solution in the washing C well can be 750-850µL, and the eluent in the elution well can be 150-250µL to perform more thorough washing and elution operations. When the testing object is a bacterium, the reserved well contains proteinase K reagent, and the pipetting module 50 can transfer the sample liquid to the reserved well to perform protein capsid dissolution. Afterwards, the pipetting module 50 can transfer the solution in the reserved well to the lysis well, so that the all-in-one machine can process bacterial sample testing and virus sample testing, with stronger compatibility. The lysis well, magnetic bead storage well, and elution well are all provided with heating units. The heating inside the cracking well can compensate for the heating temperature of adjacent magnetic bead storage wells, making the cracking more complete and improving the yield of nucleic acid fragments to ensure the accuracy of testing. The provision of heating unit solution in the magnetic bead storage well will not affect the physical properties of the magnetic beads and will not have adverse effects on the entire reaction. Of course, in actual use, some of the wells of the connecting tube extraction kits can also be merged or split to form 9-well, 8-well, 11-well, and 12-well connecting tube kits. Of course, in order to ensure the extraction effect, the number of wells should not be less than 8. In this scheme, both ends of the 10-well connecting tube kits are respectively the first and second pipetting tip wells that are adapted to different capacities of pipetting tips. The capacity of the first pipetting tip (used for transferring sample liquid) can be configured to be more than twice the capacity of the second pipetting tip (used for transferring eluent), which can meet the requirements of efficient and sufficient transfer of sample liquid. The eluent and PCR pre-mixed solution can be accurately and minimally transferred, adapting to different transfer needs, as shown in Fig. 8. The pipetting tip near the sample tube is the sample liquid pipetting tip with a first capacity, which is used to cooperate with the pipetting module 50 to transfer sample liquid from the sample tube to the lysis well of the extraction kit. In this process, the lower driving unit is configured to drive the carrying platform 204 to move horizontally, Here, the first motor 101 of the lower driving unit is configured to drive the carrying platform 204 to move horizontally through the first lead screw 102. The upper driving unit drives the combination module during the first time period, which overlaps with the second time period of driving by the lower driving unit, and then drives the pipetting module 50 to quickly and accurately transfer the sample liquid to the lysis well. After the execution is completed, the sample liquid pipetting tips are recovered to the first pipetting tip well. During this process, the top fan 8022 can operate continuously. Cooperating with the driving in the overlapping time periods of the upper and lower driving units can achieve rapid switching of the environment for extraction kits and reduce contamination risks, and the exposure time of sample liquid pipetting tips that have been in contact with the sample liquid can be shortened. One end of the magnetic rod cover 5006 well, far away from the sample liquid pipetting tips, is arranged in the 10-well connecting tube kits, far away from the other end of the first pipetting tip well, and adjacent to the second pipetting tip well. The second pipetting tip well is internally provided with eluent pipetting tips having a second capacity, and the eluent pipetting tips are used to transfer the eluent to the amplification kits. Fig. 9a illustrates the extraction module 60 moving to the magnetic rod cover 5006 well, connecting to the magnetic rod cover 5006, and then moving to the magnetic bead storage well. Fig. 9b illustrates the magnetic rod extending downwards into the magnetic rod cover 5006, adsorbing the magnetic beads from the magnetic bead storage well to the magnetic rod cover 5006. The extraction module 60 transfers the magnetic beads to the lysis well, adsorbs magnetic beads from the magnetic bead storage well and transfer the magnetic beads to the lysis well. During this process, the upper and lower driving units can have overlapping time periods to drive the combination module and the carrying platform 204 respectively, which can achieve efficient and low contamination risk nucleic acid fragment adsorption. Fig. 9c illustrates the vibration, rotation, and mixing of the magnetic rod cover 5006 at the lysis well. Fig. 9d illustrates the magnetic bead adsorbing and lysing nucleic acid fragments, and the extraction module 60 transfers them to the washing A well. Fig. 9e illustrates washing and purification of nucleic acid fragments in washing A well. Fig. 9f illustrates the transfer of extraction module 60 to washing B well. Fig. 9g illustrates the washing and purification of nucleic acid fragments in washing B hole position. Fig. 9h illustrates the transfer of the extraction module 60 to the washing C hole position. Fig. 9i illustrates the washing and purification of nucleic acid fragments in the washing C well. Fig. 9j illustrates the transfer of the extraction module 60 to the elution well. For some viruses, after completing the washing and purification in Fig. 9g, the transfer in Fig. 9j is directly performed to the elution well without performing Figs. 9h and 9i. Fig. 9k illustrates the release of nucleic acid fragments in the elution well. Fig. 9l illustrates the recovery and transfer of magnetic beads to the magnetic bead storage well according to S1, and the magnetic rod cover 5006 is placed back to the magnetic rod cover 5006 well according to S2, completing the entire process of sample extraction and purification using the magnetic bead method in conjunction with the 10-hole connecting tube kits. Throughout the entire operation process, the extraction and purification process using the magnetic rod cover 5006 and the sample liquid transfer process using the sample liquid pipetting tips can avoid overlapping displacement, reducing the risk of cross contamination during the extraction process due to sample evaporation.

The upper portion also comprises an amplification kit uncapping/capping mechanism 70, and the amplification kit uncapping/capping mechanism 70 can be designed using the prior art structures, such as a kit uncapping/capping structure disclosed in application number CN111847344A, comprising an adapter plate, an amplification kit cap fixing plate, and an amplification kit body fixing plate; the adapter plate, amplification kit cap fixing plate, and amplification kit body fixing plate are arranged in sequence from top to bottom; the adapter plate and the amplification kit body fixing plate are movably sleeved on several guide rods arranged vertically, and can move up and down along the guide rods. The upper end of each guide rod is provided with a guide rod I upper limit block, and the guide rod I upper limit block is located above the adapter plate. The lower end of each guide rod is provided with a guide rod I lower limit block, and the guide rod I lower limit block is located below the amplification kit body fixing plate; there are several guide rods II vertically arranged between the adapter plate and the amplification kit cap fixing plate. The upper end of the guide rod II penetrates the adapter plate, and the lower end of the guide rod II is fixedly connected to the amplification kit cap fixing plate; the upper end of the guide rod II is provided with a guide rod II upper limit block, and the guide rod II upper limit block is located above the adapter plate;
an amplification kit cap fixing mechanism is provided at the bottom of the amplification kit cap fixing plate, and the amplification kit cap fixing mechanism is used to fix the amplification kit cap on the amplification kit cap fixing plate;
the amplification kit body fixing plate is provided with several amplification kit body fixing grooves, and the amplification kit body fixing grooves penetrate the amplification kit cap fixing plate from top to bottom.

Of course, the amplification kit uncapping/capping mechanism 70 can integrate the hot cap function, thereby ensuring that the top temperature of the amplification kit is high while being tightly pressed during the amplification process, consequently to reduce or even avoid condensation and other problems caused by cold wall surfaces during the thermal cycle.

The amplification kit area 306 is loaded with amplification kits; the amplification kit includes a pre-mixing part stored with freeze-dried non-specific reagents not corresponding to the target, specifically, the freeze-dried non-specific reagent form here can be in powder state or freeze-dried ball form (as shown in the freeze-dried ball form in Fig. 33). In order to achieve efficient mass production, the optimal form is freeze-dried ball form, which can be in quantities of 2, 3, 4, 5, and so on. This solution solves the problems in in-situ freeze-drying of poor consistency in freeze-drying at different reaction wells and uneven moisture content after freeze-drying; non-specific reagents are unrelated to the target. Therefore, when the extracted eluent is added to the pre-mixing part, the same pipetting tip 5003 can be used to achieve sufficient mixing of the pre-mixed solution, solving the problem of waste caused by the inability to mix with the same pipetting tip 5003 in situ freeze-drying. Non-specific reagents can include buffering agents dNTPS, enzymes, cryoprotectants, freeze-dried excipients, etc. where the cryoprotectants can be selected as polyhydroxy compounds, sugars, amino acids, proteins, or other types such as Tween 80, sodium dodecyl sulfonate; the concentration of the cryoprotectants is based on its hygroscopicity and minimal impact on the Ct value of the amplification system. The cryoprotectants are provided to ensure that the difference between the Ct value of the reaction system after reconstitution and the Ct value of the liquid reagent reaction system is not greater than 0.4. Its addition can protect the enzymes in the reaction system, thereby reducing the difference in amplification efficiency between the reconstitution reagent and the liquid reagent; the freeze-dried excipients are mainly used to help freeze-dried reagents maintain a certain shape and facilitate transfer. They can be high molecular weight compounds, proteins, or other substances (such as gelatin, mannitol, α-lactose), and their concentrations and specific components are comprehensively provided according to factors such as reconstitution speed, changes in system viscosity after reconstitution, amplification efficiency, and freeze-dried bead morphology.

The amplification kits also include N dispensing wells physically spaced apart from the pre-mixing part, where N is an integer not less than 2. In the present embodiment, the number of the dispensing wells N is 6, and with the design of a four-channel fluorescence testing system, it is possible to achieve a testing design where no more than 4 targets are tested in each dispensing well. In order to achieve accurate quality control of each dispensing well, primer probe reagents for internal standards can be provided in each dispensing well, thereby enabling multiple testing of 18 targets simultaneously using 6 dispensing wells. Of course, it is also possible to configure variable numbers of targets, such as 17, 16, 15, for target testing. In the 6 dispensing wells, at least one dispensing well contains primer probe reagents corresponding to no less than M targets, where M is an integer not less than 2, and the primer probe reagents are stored in a second dry state. Due to the fact that the reagent stored in the second dry state is a primer probe, it has been experimentally verified that the dryness of the primer probe has little effect on the final amplification result. Therefore, the second dry state of the present invention is obtained by drying, and preferably the moisture content of the freeze-dried non-specific reagent is less than that of the primer probe reagent stored in the second dry state. This can achieve the best cost and amplification efficiency, which is basically consistent with the freshly prepared liquid reagent. At the same time, the moisture content of the freeze-dried non-specific reagent does not exceed 3%, to achieve longer and more stable storage effect. This diagram shows that each of the 6 dispensing wells contains primer probe reagents corresponding to 3 targets stored in the second dry state, and each well also contains primer probe reagents corresponding to the internal standard gene. This can achieve multiple testing of up to 18 targets. When combined with the dispensing wells containing primer probe reagents, which also contain primer probe reagents corresponding to the internal standard gene stored in the second dry state, multiple testing of less than 18 targets can be achieved. For example, only 4 of the dispensing wells participate in testing, and each contains 3 targets, thus multiple testing of 12 target genes can be achieved. Of course, at least some of the N dispensing wells contain primer probe reagents corresponding to different numbers of targets stored in the second dry state. Primer probe reagents can partially contain two or even one target in dispensing wells, achieving multiple testing of 11, 10 target genes, etc.; the primer probe reagents here exist in trace amounts, for example, it can be dissolved in 1.5µL of deionized water or other solvents and dried. Of course, it can also be 1µL, 1.2µL, 1.4µL, 2µL, 2.4µL, etc. The optimal reagent should not exceed 3µL, which can ensure efficient production with high drying efficiency and also effectively dissolve sufficient primer probe reagents.

The amplification kits also include a liquid seal reagent storage part, and the liquid seal reagent storage part stores liquid seal reagents such as paraffin oil and liquid paraffin. After the pre-mixed solution in the pre-mixing part is transferred to the dispensing well, a certain volume of paraffin oil liquid seal reagent can be further transferred to the corresponding dispensing well. Under the effect of density difference, the paraffin oil will float on the upper part of the solution to be amplified in the dispensing well, achieving a cap like isolation function during the amplification process, and ensuring efficient and accurate amplification effect.

The present embodiment directly utilizes the top of the pre-mixing part. On the one hand, since the pre-mixing part does not participate in the PCR reaction of the dispensing well, this well does not need to come into contact with the hot cover that is usually in contact with PCR reaction, which can ensure the effective adhesion of electronic information labels (the temperature of the hot cover is generally designed to be 105°C). On the other hand, there will be no change in the adhesive or material of the electronic label itself and it will not be adhered to the instrument. As shown in Figure 34, the top of the pre-mixing part is provided with a recess (not marked), and the depth of the recess is greater than the thickness of the electronic information label, which ensures the reliable adhesion of the label. Ideally, the electronic information label is a QR code label that can ensure more effective identification with minimal space occupation, and the label can also contain more information than a barcode.

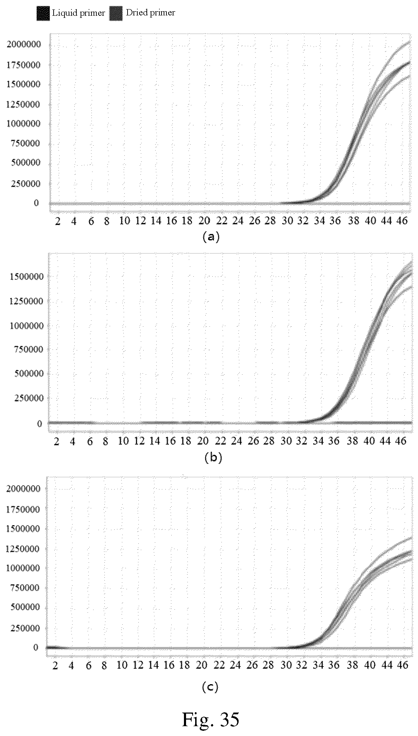

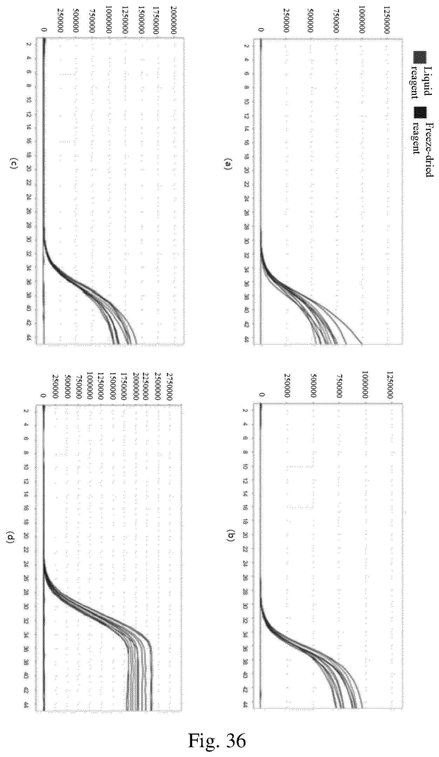

Figs. 35 and 36 respectively verify the effectiveness of the amplification kits designed using the segmentation thinking of the present invention under different dry states. In Fig. 35, the primer probes required for pathogen amplification are loaded in several dispensing wells of the amplification kits in form of dried powder. In contrast, the primer probes in the comparative state are presented in liquid form in the amplification kits. However, considering the needs of transportation and storage at room temperature of this amplification kit, the amount of primer probes in the test strip is relatively small (trace 1.5uL) and the stability of the primer probes, so the primer probes are dried at the bottom of the tube to meet the above requirements. And experimental tests have shown that there is no significant difference in performance between the reconstituted and liquid primer probes after drying. The curves a, b, and c in Fig. 35 show the testing results of influenza A virus, influenza B virus, and respiratory syncytial virus, respectively. This testing result also confirms the rationality of storing primer probes in the dried state.

Similarly, the non-specific reagent is stored in the pre-mixing part of the amplification kits in Fig. 36 in the form of freeze-dried beads, which can also be in the form of freeze-dried powder. There is no limit here. The corresponding dispensing well is stored with liquid primer probe sequence reagent (which can be 1.5µL). The comparative amplification kits are several liquid reagent reaction systems of the same system provided. The comparison results of the two solutions are as shown in Fig. 36. The curves of a, b, c and d in Fig. 36 respectively show the testing results of nose (A/B/C)/enterovirus (A/B/C/D), COVID-19 1ab and COVID-19 N. According to the testing results in Fig. 36, it can be confirmed that each component has been effectively protected during freeze-drying, and the amplification effect after reconstitution is basically similar to that of liquid reagent.

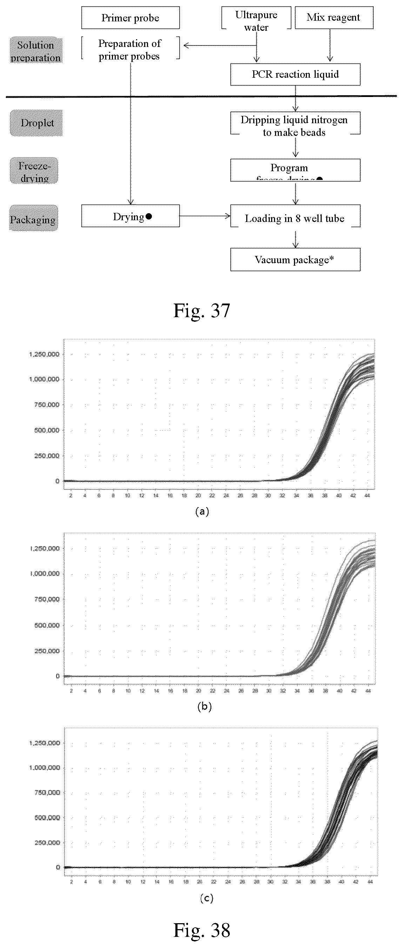

Fig. 37 shows the production process of amplification kits, comprising a liquid preparation: dissolving primer probes in ultrapure water to form a primer probe solution, and then dissolving Mix reagents in ultrapure water to form a non-specific PCR reaction solution; the composition can be described in the explanation section of Fig. 33; a bead preparation step: dropping the non-specific PCR reaction solution into liquid nitrogen to achieve rapid cooling and form a frozen state; a freeze-drying step: introducing into the freeze-drying program to obtain freeze-dried beads; the freeze-drying program can include sublimation of solid water under a predetermined vacuum degree and multiple stages of freeze-drying steps to achieve a freeze-dried state that meets the water content requirements; the primer probe sequence is dried in the dispensing well of the amplification kits to achieve the second dry state; the non-specific reagents in freeze-dried bead form are loaded into the pre-mixing part of the amplification kits; the pre-mixing part here can contain several freeze-dried balls to meet the reagent requirements of the reaction system, complete the packaging step, and then vacuum package the amplification kits as a whole, forming a segmented thinking design of amplification kits. The solution of the present invention can efficiently streamline operations without affecting production efficiency.

Fig. 38 shows the stability test results of the amplification kits provided by the present invention. The amplification kits designed using the segmentation thinking of the present invention have non-specific reagents in a freeze-dried state in the pre-mixing part, while primer probe reagents corresponding to the target are stored in the dispensing wells in a second dry state, where the optimal moisture content of the non-specific reagents in the freeze-dried state is lower than that of primer probe reagents stored in the second dry state. Qualified amplification kits are placed at 55°C for accelerated destruction for 14 days and 30 days, respectively. Parallel comparisons are made with amplification kits stored at the specified temperature (2-30 °C) to verify the stability of the amplification kits. In Fig. 38, the curve a shows the testing results of amplification kits stored at the conventional temperature, curve b shows the testing results of amplification kits after 14 days of acceleration at 55°C, and curve c shows the testing results of amplification kits after 30 days of acceleration at 55°C. From the above testing results, it can be seen that there is no significant difference between the results of accelerated destruction for 14 days and 30 days and the testing results of amplification kits stored normally, indicating that the stability of amplification kits is good and that the segmentation thinking design of amplification kits is feasible and reliable.

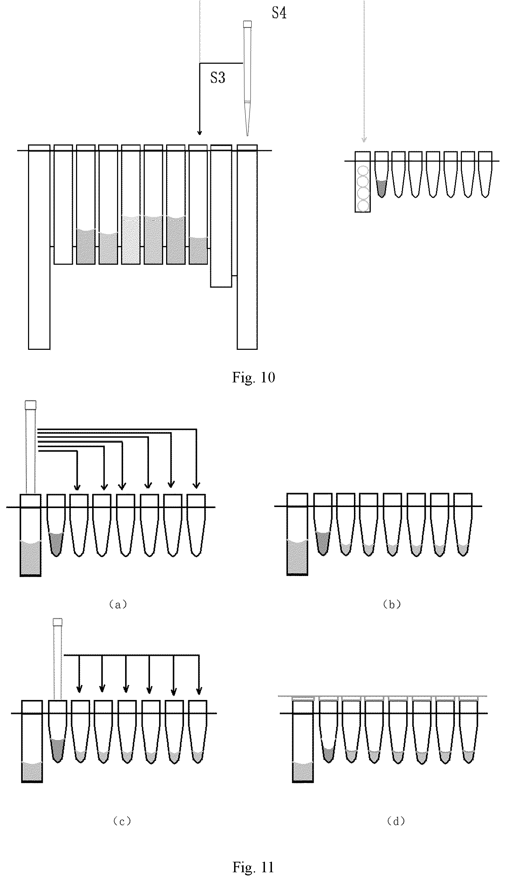

Fig. 10 illustrates the eluent transfer operation performed by the second volume of eluent pipetting tips in conjunction with the pipetting module 50. The pipetting module 50 is connected to the eluent pipetting tips, and then moves to the eluent well according to S3 to absorb the eluent. Afterwards, the eluent is transferred to the pre-mixing part of the amplification kits by twice according to S4. Similarly, the upper and lower driving units is configured to drive the combination module and the carrying platform 204 with overlapping time periods, allowing for fast and low-contamination transfer of eluent. The separation of two types of pipetting tip wells at both ends of the 10-well connecting tube kits also minimizes the risk of cross contamination caused by sample liquid evaporation, ensuring that the all-in-one machine can accurately and repeatedly obtain testing results with small differences. In the process of transferring the eluent, the first volume of eluent is first transferred to dissolve some of the freeze-dried non-specific reagents, increasing the empty volume in the pre-mixing part. Then, the second volume of eluent is transferred. The eluent pipetting tips are used to perform several suction and discharge operations in the pre-mixing part, which can fully mix the eluent with non-specific reagents without contamination, and obtain the pre-mixed solution to be dispensed without the need to configure different pipetting tips for pre-mixing and dispensing of the pre-mixed solution. As shown in Fig. 11a and Fig. 11b, the pre-mixed solution after thorough mixing is gradually transferred to each dispensing well by the eluent pipetting tips. Here, the pre-mixed solution is separated by the pipetting module using multiple suction and discharge methods, which can make the pre-mixed solution volume in each dispensing well as consistent as possible, ensuring accurate dispensing. After completing the pre-mixed solution dispensing, as shown in Fig. 11c, the pipetting module absorbs paraffin oil from the liquid seal reagent storage part that is less than the pre-mixed solution dispensing volume by multiple suction and multiple discharges and transfers it to each dispensing well. The optimal volume of paraffin oil in each dispensing well is between 1/2-4/5 of the pre-mixed solution volume transferred. It can ensure that the transfer of paraffin oil is not excessive and does not affect the amplification reaction speed in the dispensing well, avoiding the problem of false negatives caused by insufficient amplification. On the other hand, it can also ensure sufficient coverage of the pre-mixed solution by paraffin oil to achieve better liquid seal and minimize the evaporation of the pre-mixed solution, ensuring that the testing sensitivity and accuracy are not affected, as shown in Fig. 11d. Finally, the amplification kits are capped for subsequent operations.

The pipetting module 50 can transfer and discharge liquid at a first pipetting speed, and mix and discharge liquid at a second pipetting speed. The first pipetting speed is 1/3 of the second pipetting speed. The suction and pipetting speed of the transfer module 50 can be controlled by adjusting the feed rate of the pipetting push rod. When the transfer module 50 discharges liquid at the second pipetting speed, the feed rate of the pipetting push rod is 10mm/s.

The casing 301 further comprises a process operation monitoring module, and the process operation monitoring module comprises an intake module which includes at least one intake subunit for direct or indirect one-to-one correspondence with at least one medical consumable; the intake module connected to at least one medical consumable moves to the automated loading area 303, and the sample liquid is processed within the automated loading area 303 relying on the connected at least one medical consumable; after completing the sample liquid processing, the intake module can transfer the connected at least one medical consumable to the consumable recycling module for recycling; a monitoring module, comprising at least one TOF sensor 5002, capable of corresponding to the at least one medical consumable, and continuously obtaining distance information from the at least one medical consumable to the at least one TOF sensor 5002 during the time period when at least one intake subunit is connected to the at least one medical consumable, and/or during the time period when the at least one medical consumable is moved to the automated loading area 303, and/or during the time period when the at least one medical consumable is transferred to the consumable recycling module for recycling; the processing module determines whether the process operation is correctly executed in different time periods based on the distance information; the intake module comprises no less than two sub-intake modules, and the first sub-intake module is the pipetting module 50; the pipetting module 50 contains at least one pipetting head 5001 for direct or indirect one-to-one correspondence with at least one pipetting tip 5003; the second sub-intake module is the extraction module 60, and the extraction module 60 includes at least one magnetic rod cover installation part 5005 for direct or indirect one-to-one correspondence with at least one magnetic rod cover 5006. The pipetting tip 5003 comprises at least a first volume of sample liquid pipetting tips and a second volume of eluent pipetting tips loaded onto the extraction kits. At different time periods during the process operation of medical consumables, the relative distance between at least one TOF sensor 5002 and at least one medical consumable is a basic fixed value. During different time periods of the process operation of medical consumables, the processing module can determine whether at least one medical consumable is connected to at least one intake subunit without tilting based on the distance information from at least one medical consumable to at least one TOF sensor 5002. The processing module can determine whether at least one medical consumable is connected to at least one intake subunit without tilting based on the distance information from at least one medical consumable to at least one TOF sensor 5002. The process operation monitoring module further includes a calibration module, and the calibration module is located at a standard distance from at least one TOF sensor 5002. The processing module can adaptively calibrate the precision of at least one TOF sensor 5002 according to the standard distance.

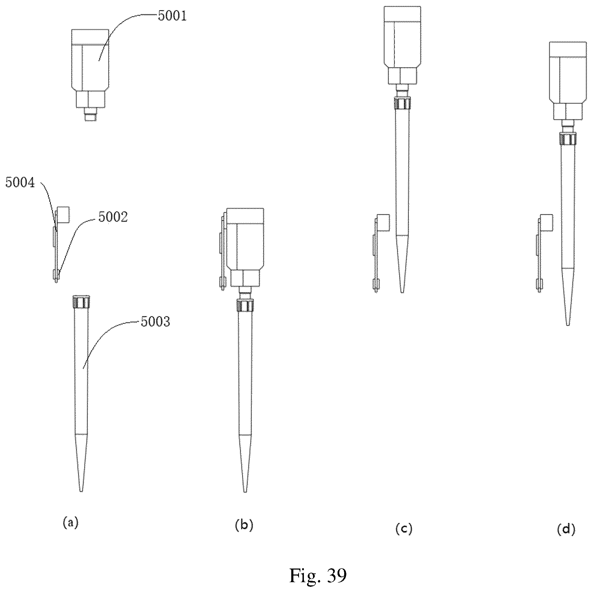

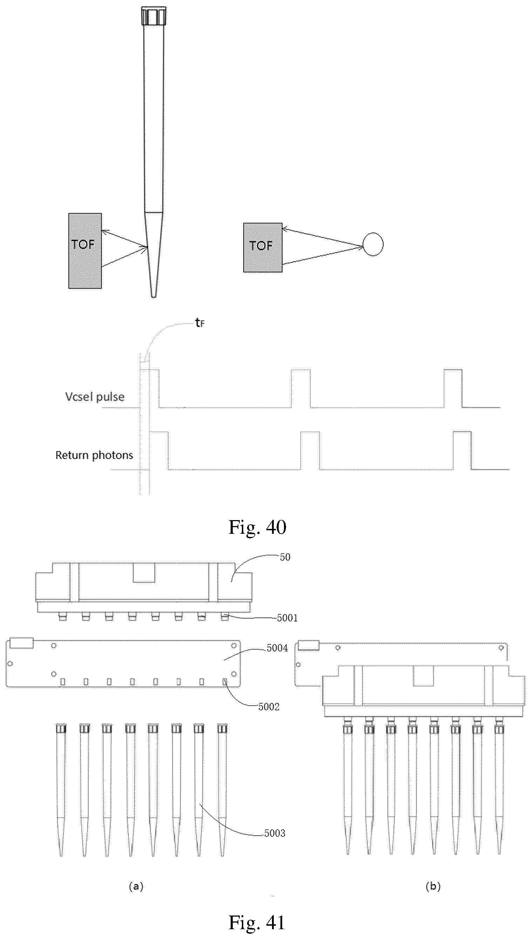

Fig. 39 is a schematic diagram of the connection between the pipetting tip 5003 and the pipetting head 5001 provided in an embodiment of the present invention under the testing of the TOF sensor 5002. Fig. 39a illustrates the pipetting head 5001 driven to transfer to the position directly above the pipetting tip 5003. In order to achieve process testing, the corresponding TOF sensor 5002 is installed on the assembly part 5004 that is driven to move relative to the pipetting head 5001. This achieves that the TOF sensor 5002 can maintain a relatively constant distance from the pipetting head 5001 in terms of the direction and dimension of movement under the driving action. At this point, the TOF sensor 5002 can perform testing. Based on the testing results, it can be determined whether the pipetting head 5001 has an unremoved pipetting tip 5003. If no pipetting tip 5003 is tested, the status is correct and the pipetting head 5001 can be driven to move downwards. Turning to Fig. 39b, the pipetting head 5001 is in contact with the pipetting tip 5003 under the action of downward driving force, and is reliably connected to the pipetting tip 5003 under the action of appropriate driving force. After completing the connection between the two, the upward driving force can enable the pipetting head 5001 to drive the connected pipetting tip 5003 to move upwards. During the upward return movement period, the TOF sensor 5002 can be used to test whether the pipetting tip 5003 is connected to the pipetting head 5001 in time. If it is tested that the two are not connected, the driving module can drive the pipetting head 5001 to move downwards again to reconnect the two. When it is tested that the two have been connected, the upward drive can continue as shown in Fig. 39c, so that the TOF sensor 5002 can obtain the length of the entire pipetting tip 5003, thereby achieving the effect of identifying the type of consumables and whether the application is accurate using the TOF sensor 5002. Similarly, using this information can accurately determine whether the pipetting tip 5003 is correctly connected to the pipetting head 5001 (because the length obtained when the connection is loose will be longer than the actual length of the pipetting tip 5003, and when the connection is too tight or deformed, the length obtained will be shorter than the actual length of the pipetting tip 5003). Fig. 39d illustrates that after completing the connection determination, the pipetting head 5001 needs to move to a predetermined position with the connected pipetting tip 5003 for subsequent operations, such as sample liquid transfer or extraction liquid transfer dispensing. During this movement time period, the TOF sensor 5002 can continuously obtain the relative distance from the pipetting tip 5003 (here, the predetermined position of the pipetting tip 5003 can be aligned with the TOF sensor 5002). By identifying and converting this distance information, it is possible to dynamically obtain the testing effect of whether the pipetting tip 5003 is reliably connected to the pipetting tip 5001 during the time period when it is transferred to the predetermined position. Fig. 40 illustrates the basic principle of the TOF sensor 5002 acquiring the distance of the pipetting tip 5003. TOF stands for time-of-flight testing method. The TOF sensor 5002 used in the present invention is an infrared type sensor, especially a time-of-flight sensor in the near-infrared wavelength range. It adopts a direct time-of-flight solution, which emits pulsed light waves through a laser source. When encountering medical consumables such as the pipetting tip 5003, at least part of the light waves turn back and become return light, which is received by the receiving probe of the sensor. Here, edge triggering designs such as leading edge triggering and trailing edge triggering can be used to sense the returned photons. As shown in the figure, the time-of-flight (TOF) can be obtained by using the time difference between the triggering edges of the emitted light and the return light. In this way, the distance between the TOF sensor 5002 and the pipetting tip 5003 can be obtained. Of course, the above selection of near-infrared emitted light mainly considers human eye safety and minimal interference. In addition, infrared sensors with longer wavelengths and deeper absorption depths at the receiving end can enhance the result reliability of the testing unit. The wavelength of the near-infrared emitted light source can be selected within the range of 700-1,000nm. Of course, in order to further reduce the interference of ambient light, the sensor can also be provided with an ambient light correction module to directly perform background light elimination calculations inside the sensor, thereby reducing the amount of data transmitted by the entire sensor to the system processor and greatly enhancing the dynamic and high-speed performance of the entire system.

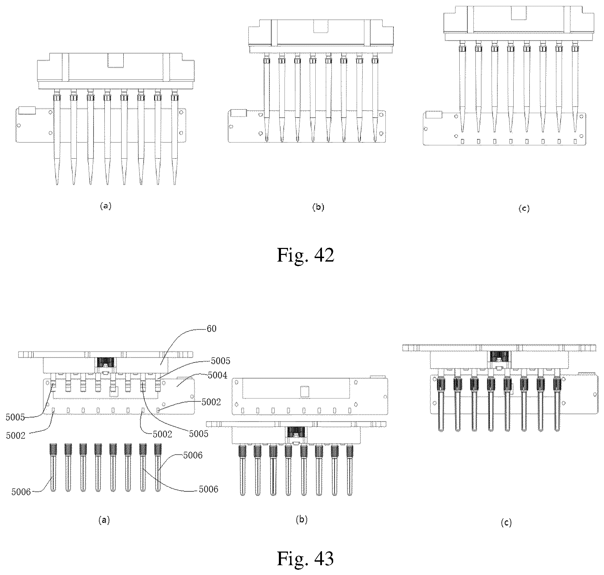

Figs. 41 and 42 illustrate the schematic diagram of the connection between multiple pipetting heads 5001 and multiple pipetting tips 5003 included in the pipetting module 50. As shown in Fig. 41a, the pipetting module 50 includes 8 parallel pipetting heads 5001. Fig. 41b illustrates 8 parallel pipetting head 5001, which can achieve the effect of transferring 8 sets of samples simultaneously, ensuring the efficiency of the entire automation system. At the same time, the assembly part 5004 is provided with corresponding 8 TOF sensors 5002. The assembly part 5004 shares the same drive with the pipetting module 50, thereby achieving the characteristic of maintaining a relatively constant relative distance between the 8 TOF sensors 5002 and their corresponding pipetting heads 5001 in one dimension. Similar to the previous embodiment, the pipetting module 50 is driven directly above the pipetting tips 5003. Here, the numbers of pipetting tips 5003 and pipetting heads 5001 are both 8. Before the pipetting head 5001 is connected to the pipetting tip 5003, each corresponding TOF sensor 5002 can first check whether there is a pipetting tip 5003 connected to the pipetting head 5001. On the premise of confirming that there isn't, the pipetting module 50 can be driven to press down to connect 8 pipetting heads 5001 to the corresponding pipetting tips 5003, as shown in Fig. 41b. After the connection is completed, the pipetting module 50 is driven to move upwards as shown in Figure 42a. During at least a portion of the rising time period, each corresponding TOF sensor 5002 can confirm whether each pipetting head 5001 is connected to the corresponding pipetting tip 5003 through corresponding testing; when at least some of the connections fail, the pipetting module 50 can fully or partially control the corresponding pipetting head 5001 to move downwards again, achieving the purpose of re-connection and re-testing. In this way, dynamic process testing can be achieved during the connection process of the pipetting tip 5003. Of course, to ensure the model and connection status of each pipetting tip 5003, the pipetting module 50 can also be driven to continue moving upwards. During the process, each TOF sensor 5002 can test in real time, as shown in Fig. 42b and Fig. 42c. When the entire pipetting tip 5003 is completely pulled upwards and finally disengaged from the testing range of the TOF sensor 5002, the model size of the pipetting tip 5003 can be finally determined. Of course, the consistency of the installation of different medical consumables can be ultimately confirmed by comparing different pipetting tips 5003. After completing the corresponding operation, the pipetting head 5001 is separated from the corresponding pipetting tip 5003, and at this time, the corresponding TOF sensor 5002 can also test whether the process is accurately performed.

Fig. 43 shows the schematic diagram of the connection and testing between the magnetic rod cover installation part 5005 and the magnetic rod cover 5006 of the extraction module 60. In this scenario, designing a TOF sensor 5002 similar to that in the aforementioned pipetting process can also achieve process based testing, thereby ensuring that the nucleic acid extraction process can be accurately and efficiently executed. Fig. 43a is similar to Figure 41a, the extraction module 60 includes 8 magnetic rod cover installation parts 5005, each of which can be driven to move up and down individually or as a whole. The extraction module 60 is driven to move directly above the magnetic rod cover 5006, in conjunction with the corresponding 8 TOF sensors 5002: firstly, checking whether the magnetic rod cover 5006 has already been provided in each magnetic rod cover installation part 5005. After confirming that there is no magnetic rod cover 5006, the extraction module 60 is driven to move downwards until the magnetic rod cover installation part 5005 is connected to the corresponding magnetic rod cover 5006 as shown in Fig. 43b. After the connection is completed, the extraction module 60 is driven to move upwards. During the upward return movement time period, it can quickly determine whether the connection process is correctly executed in conjunction with the testing results of the corresponding 8 TOF sensors 5002 without any time interval. Under the premise that at least some of the magnetic rod covers 5006 are not installed correctly, the extraction module 60 is driven to move downwards again to reconnect. When the connection is correct, the extraction module 60 and the assembly part 5004 of the 8 TOF sensors 5002 are jointly driven to the predetermined position to perform sample extraction and purification operations. During the driven movement, the TOF sensor 5002 can dynamically obtain the status of the magnetic rod cover 5006 to prevent the risk of detachment during movement, and also achieve the effect of process based testing.

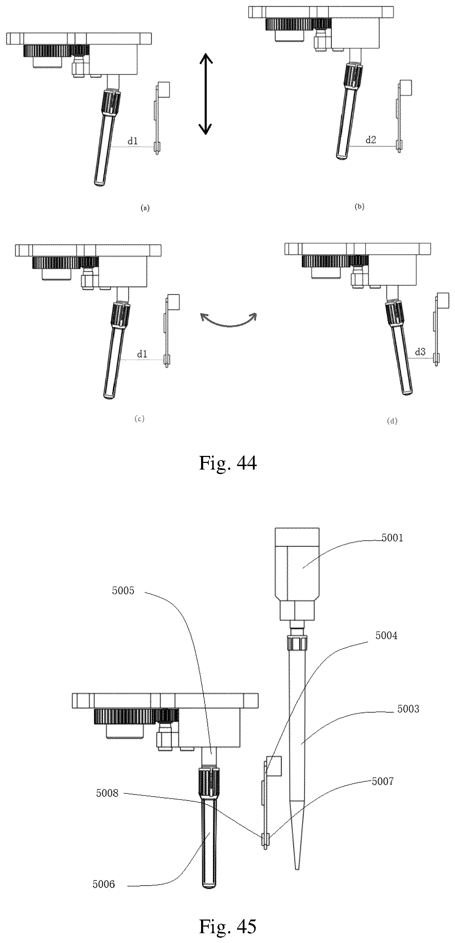

Fig. 44 illustrates a schematic diagram of identifying the abnormal installation state of the magnetic rod cover 5006 using the TOF sensor 5002. Fig. 44a illustrates a schematic diagram of testing the distance d1 from the magnetic rod cover 5006 to the TOF sensor 5002 at a certain vertical position in a tilted installation state. One solution is to identify this state using the difference in testing positions during the rising process of the magnetic rod cover 5006, as shown in Fig. 44b. The distance d2 from the magnetic rod cover 5006 to the TOF sensor 5002 tested at another position near the end of the magnetic rod cover 5006 during the rising process can be used to determine that the magnetic rod cover 5006 is tilted. Of course, this rising process can also be used to test the length and size characteristics of the magnetic rod cover 5006, in order to determine its model and installation status, etc., which is not limited here. Of course, another solution is to provide the magnetic rod cover installation part 5005 to rotate around the axis to cooperate with the testing scheme. During the rotation process, the distance from the magnetic rod cover 5006 to the TOF sensor 5002 can be obtained as d1 at one position, and the distance from the magnetic rod cover 5006 to the TOF sensor 5002 is d3 when turning to another position. This can also determine whether the magnetic rod cover 5006 is tilted. Of course, this method can also be applied to the testing of the pipetting tip 5003, which will not be repeated here. Of course, at least one of the two types of testing mentioned above is provided with a reference module. The TOF sensor 5002 can be calibrated using references within the device or system in a timed, non-timed, and adaptive scheduling manner to ensure that the TOF sensor 5002 is always in an efficient state. In addition, some references can also be provided as markers for different steps of pipetting or extraction operations to ensure that each step is executed with high precision.

As shown in Fig. 45, the present embodiment is a combined structure provided by the present invention, comprising a pipetting module 50 and an extraction module 60. The TOF sensor 5002 used in conjunction with the pipetting module 50 and the TOF sensor 5002 used in conjunction with the extraction module 60 share the assembly part 5004, ensuring the compactness of the entire system design. The TOF sensor 5002 comprises a testing subunit 5007 for testing the pipetting tip 5003 and a testing subunit 5008 for testing the magnetic rod cover 5006. The pipetting head 5001 of the pipetting module 50 can be installed with the pipetting tip 5003, or undergo process based testing for liquid transfer or dispensing with the assistance of the testing subunit 5007. The magnetic rod cover installation part 5005 of the extraction module 60 can be installed with the magnetic rod cover 5006 or undergo process based testing for different steps of extraction and purification with the assistance of the testing subunit 5008.

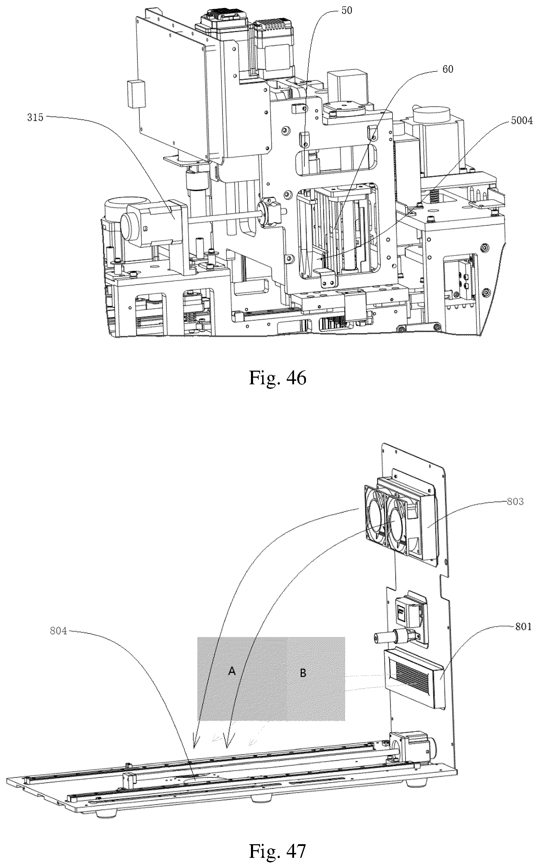

As shown in Fig. 46, a TOF sensor 5002 and an assembly part 5004 are provided between the pipetting module 50 and the extraction module 60. In order to achieve high efficiency of the system, the pipetting module 50 comprises 8 pipetting heads 5001, and the extraction module 60 comprises 8 magnetic rod cover installation parts 5005. The three are installed on the combination module base connected to the third motor 315, ensuring that when the third motor 315 drives the entire combination module to move relative to each other along one dimension, the three remain stationary in the dimension of the driven movement, and the distance among the three remains constant. Thus, the basis for real-time process testing of the TOF sensor 5002 is constructed.

The carrying platform 204 also comprises a sample analysis module, and both can be simultaneously driven by the lower driving unit to achieve the same displacement. The sample analysis module comprises a thermal block that supplies amplification reaction conditions and an optical inspection module 310. The thermal block comprises an active heat dissipation part that achieves temperature reduction. The active heat dissipation part includes a radiator 307 and a bottom fan component. The radiator 307 is connected to the automated loading area 303, and the bottom fan component includes a bottom fan 308 and an exhaust channel 309; the bottom fan 308 is connected to the exhaust channel 309, and the radiator 307 is matched with the exhaust channel 309. The bottom fan 308 can forcibly dissipate heat from the radiator 307, allowing the all-in-one machine to dissipate heat faster and ensuring internal system stability.

The carrying platform 204 also comprises a first air vent 801 located in the casing 301. The lower driving unit is configured to drive the carrying platform. The lower driving unit drives the carrying platform 204 to connect with the first air vent 801 during the thermal amplification reaction in the amplification kits, forming a first air duct. However, during at least part of the non-thermal amplification reaction time, the carrying platform 204 is separated from the first air vent 801.

A second air vent 802 is also provided on the same side of the casing 301 as the first air vent 801, which can be directly or indirectly connected to an independent air duct 8021. More preferably, a top fan 8022 connected to the independent air duct 8021 can be provided, so that during at least a portion of the time period between the carrying platform and the first air vent 801 (such as during the sample extraction and purification operation time period after the extraction kit cap body is opened), the second air vent 802 and the connected independent air duct 8021 are in operation to achieve air discharge from the all-in-one machine, ensuring that even if the sample extraction and purification operation is completed in the uncapped state, serious aerosol contamination will not be generated. This can be achieved during the cyclic amplification operation. During the process, the top fan 8022 remains in operation, and the risk of mixed cross contamination can be minimized to the greatest extent possible by the two air vents.

A third air vent 803 is also provided on the same side as the first air vent 801, and the third air vent 803 is provided with a middle fan 8031. It can provide functions such as heat dissipation, negative pressure, and contamination reduction during other time periods. A second air duct is provided between the third air vent 803 and the bottom fourth air vent 804, in which air flows from the third air vent 803 to the fourth air vent 804 as a whole.

Other time periods can be used for sample extraction and purification operations. The entire operation is carried out in the uncapped state of the extraction kits, so there may be a greater risk of contamination. At this time, the second air duct separated from the carrying platform 204 can minimize the risk of cross contamination caused by the similarity of the air duct area and airflow direction in most areas. During this time period, due to the distance between the first air vent 801 and the carrying platform 204, the first air vent 801 can also serve as an auxiliary air vent. A small amount of air enters the testing equipment casing 301 from the first air vent 801 under the negative pressure generated by the internal flow, thereby increasing the overall air renewal speed inside the equipment casing 301. The area A in Fig. 47 can be the extraction kit area 305 on the carrying platform 204, and the area B can be the amplification kit area 306. Under such air duct and airflow conditions, the extraction kit area 305 is located in the downwind direction of the amplification kit area 306. Although the extraction kits need to be operated in an uncapped state during the extraction and purification period, the extraction kit area 305 is located in the downwind direction. Therefore, even if there is a risk of contamination, it will not affect the testing results of the amplification kit area 306 in the upwind direction. Therefore, the final results obtained by the entire testing equipment are more accurate and reliable. Under negative pressure during this period, a fourth air duct can be formed between the first air vent 801 and the fourth air vent 804, and the overall airflow direction in the fourth air duct is from the first air vent 801 to the fourth air vent 804. Of course, in order to achieve the above effect, the fan can also be installed on the fourth air vent 804 located at the bottom of the casing 301.

Other time periods can also be the cycle amplification time periods. The lower driving unit drives the carrying platform 204 to be connected to the first air vent 801. At this time, the waste heat generated during the thermal cycle under the action of the bottom fan 308 can be quickly discharged from the casing 301 through the relatively closed first air duct formed by butting. The air carrying waste heat in this air duct can minimize the impact on the internal environment of the testing equipment, which is of great significance for the reliable operation of circuit/electronic control devices. At the same time, a third air duct with the airflow direction from the fourth air vent 804 to the third air vent 803 is established; on the one hand, it can quickly discharge the waste heat generated by circuit components, and on the other hand, it can also reduce the risk of internal contamination. At the same time, the first and third air ducts have a similar outflow direction, which can reduce the risk of cross contamination caused by turbulence due to significant differences in flow direction. Of course, the position of the fourth air vent 804 can also be located at the top of the casing 301, and the effect achieved in this way is similar to that at the bottom, which will not be repeated here. Of course, HEPA and other filtering components can be installed in all or part of the air vents mentioned above to filter the incoming or outgoing air, ensuring the safe and reliable operation of the instrument. Fans at different air vents can be designed according to flow rate and other parameters, and the specific number is not limited.

The optical inspection module 310 can sequentially inspect the fluorescence signals of multiple fluorescent channels at multiple dispensing wells. The optical inspection module 310 is located at the lower part of the exhaust channel 309 and is optically communicated to the bottom of the amplification kit area 306. Due to the optical inspection module 310 being located at the lower part of the exhaust channel 309, the hot air discharged from the exhaust channel 309 will not have a thermal impact on the optical inspection module 310, ensuring the reliability of the system. This also allows the entire optical inspection module 310 to be combined with the automated loading area 303 to achieve the effect of relative immobility between the two positions.

The combination module also comprises an identification module, and the upper driving unit can cooperate with the lower driving unit to ensure that the first time period of the corresponding identification module to move at least partially overlaps with the second time period of the corresponding carrying platform to move; the consumable identification camera of the identification module can perform dynamic scanning identification or static scanning identification.

### Embodiment 2

Embodiment 2 replaces the arrangement of the extraction kit uncapping/capping mechanism 30 in Embodiment 1, and is an alternative for Embodiment 1; further, the same components will not be repeated here, as shown in Fig. 24, comprising a first working layer 3014, a second working layer 3018, and a third working layer 3019 arranged in sequence from top to bottom; there are several first guide rods 3020 vertically arranged below the first working layer 3014. The upper end of the first guide rod 3020 is connected to the first working layer 3014, and the lower end of the first guide rod 3020 penetrates the second working layer 3018 and the third working layer 3019, allowing the second working layer 3018 and the third working layer 3019 to move up and down along the first guide rod 3020.

The lower end of the first guide rod 3020 is provided with a first guide rod lower limit block (similar to the first guide rod upper limit block 3023 at the extreme position in Fig. 22); the first guide rod lower limit block is located below the third working layer 3019; there are several second guide rods 3027 vertically arranged between the second working layer 3018 and the third working layer 3019; the upper end of the second guide rod 3027 penetrates the second working layer 3018, and the lower end of the second guide rod 3027 is connected to the third working layer 3019.

The upper end of the second guide rod 3027 is provided with a second guide rod upper limit block, and the second guide rod upper limit block is located above the second working layer 3018; the second guide rod 3027 is sleeved with an elastic component 3021, and the elastic component 3021 is located between the second working layer 3018 and the third working layer 3019; the first working layer 3014 is connected to the second working layer 3018 through a lifting device, and the second lifting motor 3015 is used to drive the second working layer 3018 to move up and down along the first guide rod 3020.

However, in the present embodiment, the second lifting motor 3015 is fixedly provided above or below the first working layer 3014, and the upper end of the extraction kit uncapping/capping lead screw 3016 is connected to the second lifting motor 3015; a lead screw connecting base 3017 is provided above the second working layer 3018, and the lower end of the extraction kit uncapping/capping lead screw 3016 penetrates the second working layer 3018 and the lead screw connecting base 3017, and is threaded with the lead screw connection seat 3017. Of course, although this illustrates the scenario where the second lifting motor 3015 drives the extraction kit uncapping/capping lead screw 3016 to press down at a single point, in actual use, it can also be set as a pulley lead screw transmission driven by the second lifting motor 3015, similar to the design in Fig. 23. For example, the first guide rod 3020 can be replaced with four synchronous operation units that are driven to rotate, thereby achieving a more balanced and non-tilted downward operation.

The difference between Embodiment 1 and Embodiment 2 is that, in the structure of Embodiment 1, the second lifting motor 3015 can drive several synchronous operation units directly or indirectly connected to the second working layer 3018 to operate, and the second lifting motor 3015 is directly or indirectly connected to the second working layer 3018, so that the second lifting motor 3015 also moves up and down with the second working layer 3018 during the process of driving the second lifting motor 3015 to move the second working layer 3018 up and down in the vertical direction; in this structure, the upper end of the first guide rod 3020 is provided with a first guide rod upper limit block 3023 at the extreme position of the third working layer 3019; the first guide rod upper limit block 3023 is located above the first working layer 3014; in Embodiment 2, the second lifting motor 3015 is directly or indirectly connected to the first working layer 3014, so that the second lifting motor 3015 drives the second working layer 3018 to move up and down in the vertical direction, and the second lifting motor 3015 remains fixed; in this structure, the lower end of the first guide rod 3020 is provided with a first guide rod lower limit block at the extreme position of the third working layer; the first guide rod lower limit block is located below the third working layer, so the effect of freely arranging different unit structural relationships can be achieved through two different structural designs in the present embodiment, which can ensure the reliability of the design and the low-cost performance of the design implementation.

### Embodiment 3

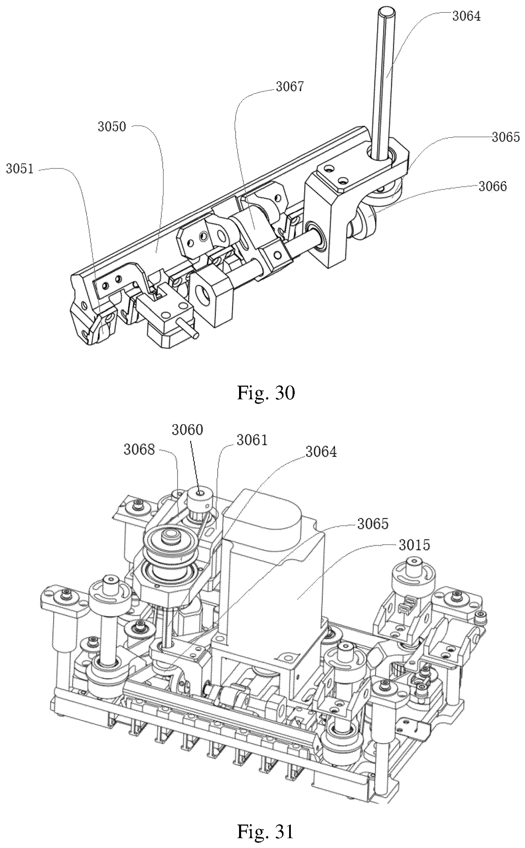

Embodiment 3 replaces the arrangement of the capping driving unit 3060 in Embodiment 1, and is an alternative for Embodiment 1; further, the same components will not be repeated here, as shown in Fig. 30, unlike the structure in Embodiment 1, that is, the capping driving unit 3060 introduces a gear meshing transmission in the middle to achieve directional change; that is, the gland rotating shaft 3064 drives the first bevel gear 3065 of the meshing gear pair to rotate, and then transmits the rotational movement to the second bevel gear 3066; the second bevel gear 3066 drives the transfer bar 3067 to rotate and swing through the transmission shaft; the elongated slot at the end of the transfer bar 3067 is used to sleeve the oscillating shaft of the gland part 3050; the transfer bar 3067 applies a driving force to transform the state of the gland part 3050; the middle of the gland part 3050 is hinged and installed to achieve pendular rotation; the upper part of the gland part 3050 is pushed by the transfer bar 3067, which drives the hinged gland part 3050 to swing upwards or downwards, realizing the connection or separation between the pressing unit 3051 and the extraction kit cap 3002.

As shown in Fig. 31, the position of the gland driving motor 3061 in a changed state is different from that in Embodiment 1. This design can ensure that the gland driving motor 3061 has a large installation space. Here, the gland driving motor 3061 can be designed to drive the pulley to rotate through the gland conveyor belt 3068, and transmit the rotational movement of the gland driving motor 3061 to the gland rotating shaft 3064. When it is necessary to remove the locked contact state, a similar effect in Embodiment 1 can be achieved by simply reversing the gland driving motor 3061.

### Embodiment 4

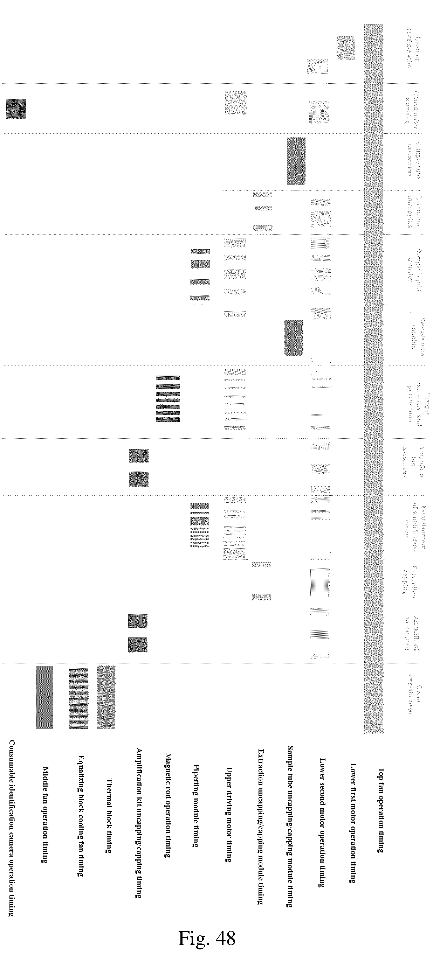

A control method of an all-in-one machine for sample testing, using the all-in-one machine for sample testing according to any of Embodiments 1-3, as shown in Figs. 1-49, comprising the following steps,
**an all-in-one machine operation step:** powering on and starting the top fan 8022.
**a loading configuration step:** with an opening and closing part 302 opened, the first and second motors 101, 201 in the lower driving unit work in series to drive the automated loading area 303 contained in the carrying platform outside the casing 30, and the sample tube is scanned with a barcode scanner to obtain the corresponding information of the sample tube; the sample tube is loaded in the sample tube area 304, the extraction kits are loaded in the extraction kit area 305, and the amplification kits are loaded in the amplification kit area 306; after loading is completed, the first and second motors 101,201 work in series to drive the automated loading area 303 back into the casing 301, with the opening and closing part 302 closed;
**a scanning identification** step: the upper driving unit drives the identification module 40 to move during a first time period, and the lower driving unit drives the carrying platform 204 to move during a second time period; the first and second time periods overlap at least partially, and the identification module 40 performs scanning identification on extraction kits and amplification kits; when the upper and lower driving units drive simultaneously, the consumable identification camera of the identification module 40 performs dynamic scanning, and when the upper driving unit drives separately, the consumable identification camera of the identification module 40 performs static scanning.
**a sample tube uncapping step:** the lifting component operates to lower the sample tube uncapping/capping mechanism 20 to the position corresponding to the target sample tube; the cap screwing component rotates counterclockwise, and the rotating head 2010 is screwed with the sample cap; the cap screwing component continues to rotate counterclockwise to drive the sample cap to rotate counterclockwise; when the sample cap is unscrewed, the cap screwing component rises;
**an extraction kit uncapping step:** the lower driving unit drives the extraction kit area 305 to move along the Y axis to the position corresponding to the entrance end of the extraction kit uncapping/capping mechanism 30, and the second lifting motor 3015 drives the second and third working layers 3018, 3019 to move downwards along the Z axis, causing the third working layer 3019 to reach the lower extreme position; at this point, the lower edge of the extraction kit body fixing groove on the third working layer 3019 corresponds to the extraction kit connecting plate 3003 of the extraction kit body 3001, that is, the lower edge of the extraction kit body fixing groove is basically flush with the upper surface of the extraction kit connecting plate 3003; the second lifting motor 3015 continues to drive the second working layer 3018 to move downwards along the Z axis, compressing the elastic component 3021 between the second and third working layers 3018, 3019, and making the highest point of the uncapping protrusion at the entrance end of the extraction kit cap slot 3022 on the second working layer 3018 slightly higher than the tube cap plate 3008 of the extraction kit cap 3002; the lower driving unit drives the extraction kit area 305 to move along the Y axis, close to the extraction kit uncapping/capping mechanism 30, so that a small part of the second flange 3009 of the tube cap plate 3008 enters the entrance end of the extraction kit cap slot 3022, while the lower edge of the extraction kit body fixing groove can press the extraction kit connecting plate 3003 of the extraction kit body 3001, and play a fixing role; the extraction kit body 3001 is fixed on the extraction kit area 305, and the extraction kit area 305 can continue to move along the Y axis, so that the second flange 3009 of the tube cap plate 3008 further enters the entrance end of the extraction kit cap slot 3022; the cap prying part of the uncapping protrusion slightly pries the extraction kit cap 3002. At this time, the lower edge of the extraction kit body fixing groove still presses the extraction kit connecting plate 3003 of the extraction kit body 3001 for fixing; the second lifting motor 3015 drives the second working layer 3018 to move upwards a small distance along the Z axis, in order to increase the force of the uncapping protrusion to pry the extraction kit cap 3002. At this time, the elastic component 3021 between the second and third working layers 3018, 3019 is still in a compressed state; the lower edge of the extraction kit body fixing groove still presses the first flange 3006 of the extraction kit body 3001 for fixing, and the extraction kit area 305 continues to move along the Y axis, until the extraction kit cap 3002 is fully inserted into the extraction kit cap slot 3022. In this process, the uncapping protrusion pries the entire extraction kit cap 3002. At last, the extraction kit cap 3002 is fully inserted into the extraction kit cap slot 3022. In this process, two fixed bolts 3013 provided at both sides of the extraction kit area 305 are respectively clamped into clamping holes on both ends of two fixed strips below the extraction kit uncapping/capping mechanism 30, forming four-point fixation; finally, the second lifting motor 3015 drives the second working layer 3018 to move upwards along the Z axis, in order to pull out the entire extraction kit cap 3002 inserted in the extraction kit cap slot 3022 based on the second flange 3009 as the force point; after completing the uncapping operation, the extraction kit body 3001 is located in the extraction kit slot 3012 of the extraction kit area 305; the extraction kit cap 3002 is nested in the extraction kit cap slot 3022 of the second working layer 3018;
**a sample liquid transfer step:** the upper driving unit drives the pipetting module 50 to move during a first time period, and the lower driving unit drives the carrying platform 204 to move during a second time period; the first and second time periods overlap at least partially, and the upper and lower driving units cooperate with each other to drive the pipetting module 50 to move between the sample tube and the lysis well of the extraction kit to perform sample liquid transfer operations;
**a sample tube capping step:** the lifting component operates to lower the sample tube uncapping/capping mechanism 20 to the position corresponding to the target sample tube; the cover screwing assembly rotates clockwise to drive the sample cap to rotate clockwise; the sample cap is screwed onto the sample tube body, and the cap screwing component continues to rotate clockwise; the rotating head 2010 disengages from the sample cap, and the cover screwing component rises;
**a sample extraction and purification step:** the upper driving unit drives the extraction module 60 to move during a first time period, and the lower driving unit drives the carrying platform 204 to move during a second time period; the first and second time periods overlap at least partially, and the upper and lower driving units cooperate with each other to drive the extraction module 60 to move among the wells of the extraction kits to perform sample liquid extraction and purification operations;
**an amplification system establishment step:** the upper driving unit drives the pipetting module 50 to move during a first time period, and the lower driving unit drives the carrying platform 204 to move during a second time period; the first and second time periods overlap at least partially; the upper and lower driving units cooperate with each other to drive the pipetting module 50 to move between the elution well of the extraction kit and the pre-mixing well of the amplification kit to perform eluent transfer operation; the pipetting module 50 performs n mixing operations at the pre-mixing well, where n is a positive integer; the mixing operation involves the pipetting module 50 aspirating the eluent from the elution well and then dispensing it into the pre-mixing well; after the eluent is mixed with the freeze-dried reagent, the upper and lower driving units cooperate with each other to drive the pipetting module 50 to perform solution dispensing operation between the wells of the amplification kit; the pipetting module 50 gradually transfers the pre-mixed solution after thorough mixing to each dispensing well using multiple suction and discharge methods, and the precise multiple suction and discharge solution used here can make the pre-mixed solution volume in each dispensing well as consistent as possible. After completing the pre-mixed solution dispensing, the one suction and multiple discharge method is used to absorb paraffin oil from the liquid seal reagent storage part that is less than the pre-mixed solution dispensing volume by multiple suction and multiple discharges and transfers it to each cup well position. The optimal volume of paraffin oil in each dispensing well is between 1/2-4/5 of the pre-mixed solution volume transferred. It can ensure that the transfer of paraffin oil is not excessive and does not affect the amplification reaction speed in the dispensing well, avoiding the problem of false negatives caused by insufficient amplification. On the other hand, it can also ensure sufficient coverage of the pre-mixed solution by paraffin oil to achieve better liquid seal and minimize the evaporation of the pre-mixed solution, ensuring that the testing sensitivity and accuracy are not affected
**an extraction kit capping step:** the extraction kit area 305 moves along the Y axis to the position corresponding to the entrance end of the extraction kit uncapping/capping mechanism 30; next, the second lifting motor 3015 drives the second and third working layers 3018, 3019 to move downwards along the Z axis, causing the third working layer 3019 to reach the lower extreme position; at this point, the lower edge of the extraction kit body fixing groove on the third working layer 3019 corresponds to the extraction kit connecting plate 3003 of the extraction kit body 3001, that is, the lower edge of the extraction kit body fixing groove is flush with the upper surface of the extraction kit connecting plate 3003; the extraction tube cap 3007 opening of the extraction kit cap 3002 nested in the extraction kit cap slot 3022 of the second working layer 3018 is higher than the height of the extraction tube opening 3005 of the extraction kit body 3001 of the loading platform. Next, the extraction kit area 305 continues to move along the Y axis until the entire extraction kit body 3001 is inserted into the extraction kit body fixing groove; the second lifting motor 3015 drives the second working layer 3018 to move downwards along the Z axis, so that the extraction kit cap 3002 nested in the extraction kit cap slot 3022 is capped on the extraction kit body 3001; at this time, the gland driving motor 3061 with a changed coordination status drives the extraction kit cap 3002 and the extraction kit body 3001 to be pressed together and locked. The converted pressing force achieves a greater clamping force between the two parts. The lower driving unit drives the carrying platform 204 to move, realizing the rolling motion of the pressing unit 3051 on the surface of the cap, and completing the application of uniform pressing force on almost all surfaces of the extraction kit cap 3002, ensuring the reliable sealing of the extraction kit cap 3002 and the extraction kit body 3001. The second lifting motor 3015 drives the second working layer 3018 to move upwards a small distance along the Z axis, so that the highest point of the uncapping protrusion is slightly lower than the tube cap plate 3008 of the extraction kit cap 3002; the extraction kit area 305 is withdrawn from the extraction kit uncapping/capping mechanism 30 along the Y axis, and the extraction kit uncapping/capping mechanism 30 moves upwards to reset along the Z axis.
**an amplification kit capping step:** the amplification kit uncapping/capping mechanism 70 caps the amplification kits.
**an cyclic amplification step:** the intermediate fan is running, and the thermal block is activated, in order to perform PCR thermal cycling amplification.
an analysis step: outputting sample fragment analysis results based on fluorescence analysis method.

The present embodiment further comprises the following steps applied to the sample tube uncapping step and the sample tube capping step:
a sample tube uncapping/capping sensing step: when the cap screwing component rises to a first position, the sensor 2014 detects whether the cap screwing component is directly or indirectly connected to the sample cap;
when the cap screwing component rises to a second position, the sensor 2014 tests whether the cap screwing component is directly or indirectly connected to the sample tube body;
the driving module determines whether the sample cap and sample tube body are correctly unscrewed or screwed based on the two detecting results from the sensor 2014.

Specifically, after the sample cap is separated from the sample tube body, the driving module controls the lifting driving part 2003 of the rotating head 2010 to stop operation; at this time the cap screwing component is driven by only the lifting driving part 2003 of the lifting component; during the process of the lifting driving part driving the cap screwing component to rise, when the cap screwing component reaches a first position, multiple lifting sensors 2014 corresponding to the number of sample tubes can perform testing, and the lifting sensors 2014 here can be multiple photoelectric switches or other types of photoelectric sensors, distance sensors, etc.; in the sample tube uncapping step, since the rotating head 2010 is connected with the sample cap, during testing at the first position, when the lifting sensor 2014 tests an obstruction of the testing light, it can be determined that the rotating head 2010 has been connected to the sample cap. However, when one of the rotating heads 2010 does not test the connected sample cap, the following different situations occur: 1. perhaps due to the unsaturated operation during the addition of the sample tube, the well is not placed with the sample tube in its initial state, which is a normal situation and the device can continue to operate normally; 2. the sample tube is saturated and there is a problem with uncapping. The driving module can control the cap screwing component to attempt to uncap the sample tube again and generate an error alarm. When the driver module attempts one or more times but still encounters an error, it can generate an alarm message to notify the operator to take specific measures. After successfully connecting all the rotating heads 2010 to the sample cap, the lifting component further drives the cap screwing component to move upwards. When it rises to the second position, the lifting sensor 2014 performs further testing. At this time, it can be checked whether the sample tube body is directly or indirectly connected to the rotating head 2010. When at least a portion of the connected sample tube body is tested, the driving module can generate a warning and attempt to uncap again. If the driving module still encounters an error after one or more attempts, the driving module can generate an alarm message to notify the operator to take specific measures. When the two detecting results during the rising process of the cap screwing component indicate the presence of the sample cap and the absence of the sample tube body, the driving module can provide the final correct uncapping operation of the sample container, and the equipment can carry out subsequent operations such as sample liquid transfer. After completing all the corresponding operations, the driving module controls the capping and screwing operation of the sample tube. The entire process is similar to uncapping and will not be repeated here. There is a slight difference between the two in determining whether the sample cap is correctly screwed and closed. After capping, the cap screwing component rises to the first position which is the same or similar to uncapping for testing. At this time, the correct situation of the rotating head 2010 should be that there is no sample cap connected. In general, only one determination is needed to determine whether the screwing process is correctly executed, without the need to determine whether the sample tube body exists again. Of course, to ensure the reliability of the determination, a second testing determination can also be made at the second position or a position similar to the second position during the uncapping process, which will not be limited here.

The relative positions of the extraction kits and the sample tube area are arranged from near to far, comprising a first pipetting tip well, a reserved well, a lysis well, a magnetic bead storage well, a washing well, an elution well, a magnetic rod cover well, and a second pipetting tip well. The number of washing wells is one or more, and in the present embodiment, three washing holes are selected;

In the sample liquid transfer step, the sample liquid transfer operation involves connecting the sample liquid pipetting tip in the first pipetting tip well to the pipetting module 50, and then transferring the sample liquid from the sample tube to the lysis well of the extraction kits; after completion, the sample liquid pipetting tip is recycled to the first pipetting tip well;
in the sample extraction and purification step, the sample extraction and purification operation involves moving the extraction module 60 to the magnetic rod cover 5006 well and connecting it to the magnetic rod cover 5006; the extraction module 60 moves to the magnetic bead storage well, and the magnetic rod falls and extends into the magnetic rod cover 5006 to adsorb the magnetic beads from the magnetic bead storage well to the magnetic rod cover 5006; the extraction module 60 transfers the magnetic beads to the lysis well, and the magnetic rod cover 5006 vibrates and mixes in the lysis well; the magnetic beads adsorb and lyse nucleic acid fragments, and the extraction module 60 transfers the magnetic beads to the washing well for washing and purification; if multiple washing and purification are required, the extraction module 60 drives the magnetic beads to transfer between multiple washing wells in sequence; after washing and purification, the extraction module 60 transfers to the elution well and completes the release of nucleic acid fragments in the elution well; the extraction module 60 recycles and transfers the magnetic beads to the magnetic bead storage well, the magnetic rod rises, and the extraction module 60 places the magnetic rod cover 5006 back into the magnetic rod cover 5006 well.

In the amplification system establishment step, the pipetting module 50 can transfer and discharge liquid at a first pipetting speed, and mix and discharge liquid at a second pipetting speed in the mixing operation, where the first pipetting speed is 1/4-1/2 of the second pipetting speed. This can achieve a more thorough mixing without producing microbubbles that could affect the test results, and can also eliminate the problem of wall hanging caused by rapid discharge during the pipetting process, which may lead to false negative test results.

In the cyclic amplification step, the lower driving unit drives the carrying platform 204 to move to the first air vent 801, until the exhaust channel 309 is connected to the first air vent 801, forming a relatively sealed first air duct. The radiator 307 and the bottom fan 308 have started to cool down the amplification kit area. At the same time, the middle fan 8031 is started, establishing a third air duct with the airflow direction from the fourth air vent 804 to the third air vent 803.

In the analysis step, the principle of the fluorescence analysis method is as disclosed in application number CN201610152466.2 for a multi-fluorescence channel testing system for real-time fluorescence quantitative PCR, comprising a fluorescence testing unit, an optical fiber disk, and a turntable. The fluorescence testing unit comprises a light source, an excitation filter, a dichroscope, an optical fiber coupling lens, an optical fiber, a testing filter, and a photoelectric sensor. The dichroscope combines the existing excitation unit and testing unit into a whole. The light emitted by the light source is sequentially filtered by the excitation filter, coupled by the optical fiber coupling lens, and finally injected into the test tube through the optical fiber to excite the fluorescent substance in the sample in the test tube to produce fluorescence. Part of the fluorescence returns from the optical fiber to the optical fiber coupling lens for collimation, and the testing filter filters out pure fluorescence. Finally, the fluorescence is incident on the photoelectric sensor for photoelectric conversion; multiple optical fibers are inserted into the fiber optic disk, and multiple fluorescence testing units are distributed on the turntable. The turntable rotates once around the center of the fiber optic disk to sequentially test the fluorescence signals of multiple fluorescence channels in multiple test tube wells.

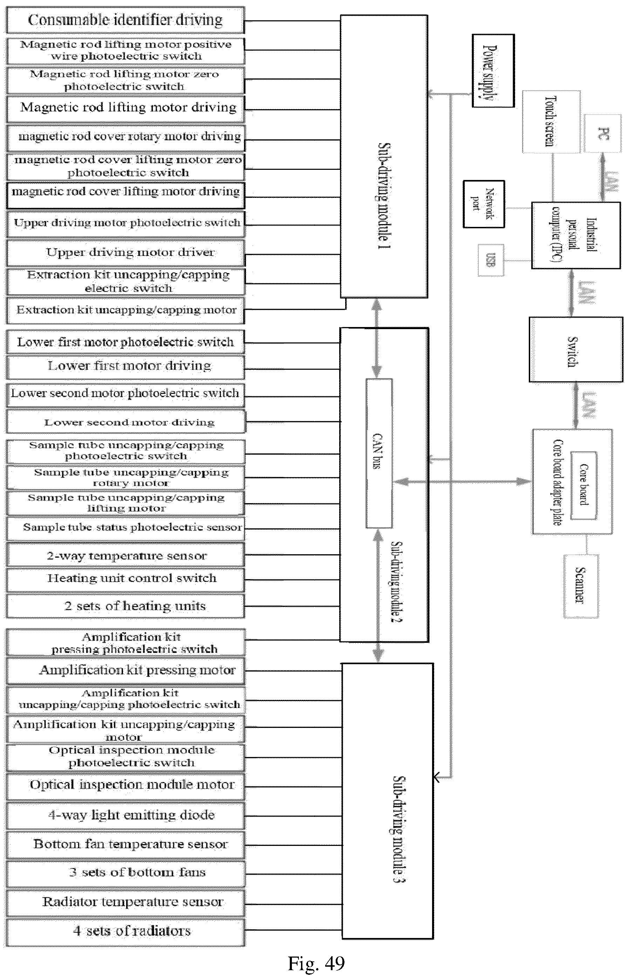

Fig. 49 illustrates a control module diagram of an all-in-one machine according to the present invention. In order to achieve low-cost and high-efficiency control of the all-in-one machine according to the present invention, the driving module is divided into three sub-driving modules, namely sub-driving module I, sub-driving module II, and sub-driving module III as shown in the figure. Each sub-driving module can be connected to the core board through the CAN bus. Each sub-driving module here can be connected to the core board using any publicly available inquiry and response mechanism to obtain control instructions converted by the core board. These control instructions can be transmitted in the form of functions or tables, and are not limited here. The core board can be connected to switches and industrial control computers through LAN connection methods. The industrial control computer can be connected to the PC end through LAN connection method to form remote control, and can also be connected to the touch screen to receive and edit touch screen information. Of course, multiple industrial control computers can be connected in parallel in a wired or wireless manner, and can also be connected to USB for version upgrades. Each sub-driving module can control the operation of different units to be driven according to the control instructions transmitted by the core board. Here, it is optimal to configure the upper driving unit driving the combination module and the lower driving unit driving the carrying platform in two different sub-driving modules. In this way, the two sub-driving modules can execute the control instructions transmitted by the core board in parallel, and can simultaneously output the driving instructions of the upper and lower driving units during overlapping time periods. There is no need for complex control coordination between the two under clock circuit configuration. In this configuration, the two sub-driving modules only need to independently arrange the driving timing according to their respective clock circuits based on the control instructions, making control more efficient. The present invention also includes multiple displacement sensors, which can perform the calibration of different mechanisms and provide an accurate reference for precise displacement control. It can also cooperate to determine whether the all-in-one machine is correctly executing the control instructions issued by the core board and provide timely feedback on the final state of the control.

Table 1 shows the 8 repeated multiple sample testing and verification results performed using the all-in-one machine of the present invention. It can be seen from the results in Table 1 that the all-in-one machine of the present invention reduces the exposure time of consumables due to the combination of the upper and lower driving units, and can efficiently and stably obtain multiple testing results. In addition, the unique arrangement of consumable wells in the present invention can reduce the possibility of cross paths in sample liquid transfer, extraction, and eluent transfer machine PCR pre-mixed solution dispensing, and further obtain efficient and stable testing results. The deviation of results obtained from 8 different target tests using the all-in-one machine of the present invention is relatively small. The small STD and small CV value clearly indicate that the design layout of the all-in-one machine is reasonable, which can reduce the impact of contamination on experimental results, and the reproducibility of experimental results is very high.

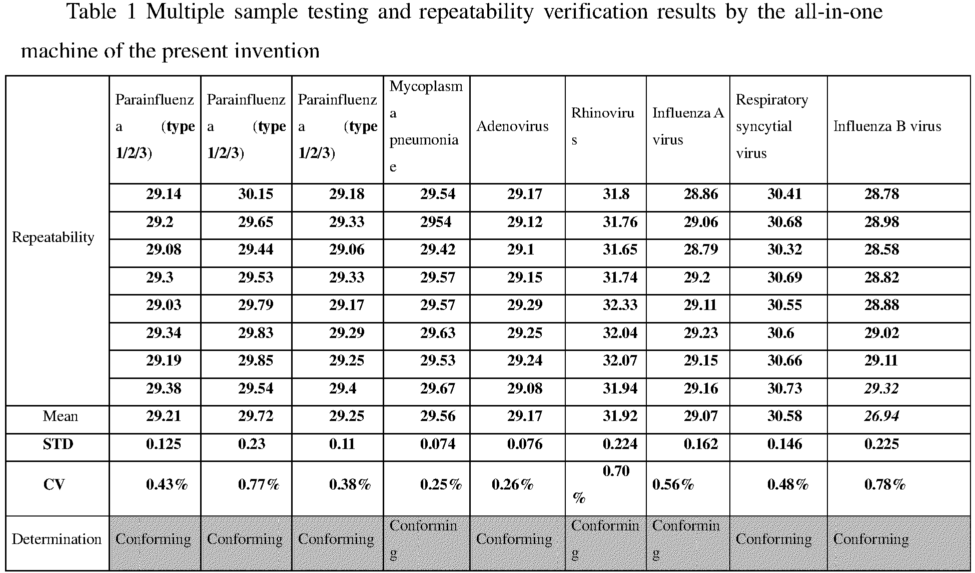

In this text, specific embodiments are taken to describe the principles and implementations of the present invention, and the description of the above-mentioned embodiments is only intended to throw light upon the methods and core concepts of the present invention. It should be pointed out that for those of ordinary skill in the art, without breaking away from the principles of the present invention, certain improvements and modifications may be made to the present invention, which also fall within the scope of protection of the claims of the present invention.

For description of the present invention, it should be noted that orientation or position relations indicated by the terms "center", "above", "under", "left", "right", "vertical", "horizontal", "inside", "outside" etc. are based on the orientation or position relations shown in the figures or the commonly arranged orientation or position relations as used in the invention, and they are used to describe the invention and simplify description herein instead of indicating or implying that the device or component indicated must have specific orientation and be constructed and operated in specific orientation. Therefore, the embodiments described herein shall not be construed as limitation hereto.

In the description of the present invention, it should be also noted that, unless otherwise specified and defined explicitly, the terms "arrangement", "assembly", "linking" and "connection" shall be comprehend in a broad sense, for example, it can be fixed connection, and can also be removable connection, or integral connection; can be mechanical connection, and can also be electrical connection; can be direct linking, and can be indirect linking through an intermediary, or connection in two pieces. Those of ordinary skill in the art can understand the specific meanings of these terms in the present invention according to actual conditions.

## Claims

1. An all-in-one machine for sample testing, comprising a casing (301), wherein the casing (301) internally comprises an upper portion and a lower portion; the upper portion comprising an upper driving unit that can drive the combination module to move horizontally, a combination module provided with a pipetting module (50) and an extraction module (60); the lower portion comprising a lower driving unit that can drive a carrying platform (204) to move horizontally, the carrying platform (204) provided with a sample tube area (304), an extraction kit area (305), and an amplification kit area (306); the upper driving unit driving the combination module to move in a first time period, the lower driving unit driving the carrying platform (204) to move in a second time period, and there exists an overlapping time period between the first time period and the second time period; the upper driving unit and the lower driving unit cooperating with each other to enable the pipetting module (50) to move between the sample tube area (304) and the extraction kit area (305) to perform sample liquid transfer operations, the extraction module (60) to move within the extraction kit area (305) to perform the sample extraction and purification operations, the pipetting module (50) to move between the extraction kit area (305) and the amplification kit area (306) to perform eluent transfer operations, and the pipetting module (50) to move within the amplification kit area (306) to perform solution dispensing operations.

2. The all-in-one machine for sample testing according to claim 1, wherein the upper driving unit drives the combination module to move horizontally at a first speed, with a first precision; and the lower driving unit drives the carrying platform (204) to move horizontally at a second speed, with a second precision; wherein the first precision is higher than the second precision and the first speed is lower than the second speed, or the first precision is lower than the second precision and the first speed is higher than the second speed.

3. The all-in-one machine for sample testing according to claim 1, wherein the lower driving unit comprises a first motor (101) and a second motor (201); and the first motor (101) can drive the carrying platform (204) to move within a first movement distance, and the second motor (201) can drive the carrying platform (204) to move within a second movement distance; the first motor (101) and the second motor (201) cooperating with each other to ensure that the movement distance of the carrying platform (204) does not exceed the sum of the first movement distance and the second movement distance; the first motor (101) and the second motor (201) cooperating with each other to drive the carrying platform (204) to extend out of the casing (301), thereby completely exposing the automated loading area (303) on the carrying platform (204) beyond the casing (301) for loading operations; the automated loading area (303) comprising a sample tube area (304), an extraction kit area (305), and an amplification kit area (306), and the first motor (101) and the second motor (201) work in series.

4. The all-in-one machine for sample testing according to claim 1, wherein the upper portion further comprises a sample tube uncapping/capping mechanism (20), and the sample tube uncapping/capping mechanism (20) acts on the sample tube, which includes a sample tube body and a sample cap; the sample tube uncapping/capping mechanism (20) comprising a cap screwing component for driving the sample cap to rotate relatively to the sample tube body and to unscrew or screw the sample cap from the sample tube body; a lifting component connecting to the cap screwing component for driving the cap screwing component to perform at least vertical movement; the cap screwing component comprising a rotating head (2010) provided with an external thread structure that can connect to the internal thread of the sample cap, and can rotate counterclockwise or clockwise to unscrew or screw the sample cap, thereby uncapping or capping the sample tube.

5. The all-in-one machine for sample testing according to claim 1, wherein the upper portion further comprises an extraction kit uncapping/capping mechanism (30), and the extraction kit uncapping/capping mechanism (30) acts on the extraction kit, which is configured with an extraction kit body (3001) and an extraction kit cap (3002); the extraction kit uncapping/capping mechanism (30) comprising a first working layer (3014), a second working layer (3018), a third working layer (3019) arranging in sequence from top to bottom; a power mechanism locating among them that can drive the second working layer (3018) to move up and down in the vertical direction; several elastic component (3021)s locating between the second working layer (3018) and the third working layer (3019); the uncapping/capping mechanism further comprising a limit part that limits the extreme position of the third working layer (3019); the power mechanism driving the second working layer (3018) and the third working layer (3019) move downwards; when the third working layer (3019) reaches the extreme position, the second working layer (3018) still moving downwards, compressing the elastic component (3021), and the compressed elastic component (3021) is in close contact with the third working layer (3019); the second working layer (3018) provided with an extraction kit cap fixing mechanism (3010) that is used to fix the extraction kit cap (3002) in the second working layer (3018); the third working layer (3019) cooperating with the extraction kit body (3001), and the third working layer (3019) can provide support for the extraction kit body (3001) during the process of uncapping or capping the extraction kit cap (3002).

6. The all-in-one machine for sample testing according to claim 5, wherein the second working layer (3018) is provided with a pressing unit (3051) for applying pressing force to the extraction kit cap (3002); when the pressing unit (3051) is driven to connect to the extraction kit cap (3002), the pressing unit (3051) partially connecting to the extraction kit cap (3002), thereby applying pressing force to a partial area of the extraction kit cap (3002); a relative movement driving part for driving the relative movement between the extraction kit cap (3002) and a gland part (3050), which pressing and connecting the extraction kit cap (3002) onto the extraction kit body (3001), thereby capping the extraction kit during the relative movement.

7. The all-in-one machine for sample testing according to claim 1, wherein the upper portion further comprises an amplification kit uncapping/capping mechanism (70), and the amplification kit uncapping/capping mechanism (70) acts on the amplification kit, which is configured with an amplification kit body and an amplification kit cap; the amplification kit uncapping/capping mechanism (70) comprising an adapter plate, an amplification kit cap fixing plate and an amplification kit body fixing plate arranging in sequence from top to bottom; the adapter plate and the amplification kit body fixing plate movably sleeved on several vertically arranged guide rods I, and can move up and down along the guide rods I; wherein the upper end of each guide rod I is provided with a guide rod I upper limit block that is located above the adapter plate; and the lower end of each guide rod I is provided with a guide rod I lower limit block that is located below the amplification kit body fixing plate; several guide rods II vertically arranged between the adapter plate and the amplification kit cap fixing plate; wherein the upper end of the guide rod II penetrates the adapter plate, and the upper end of the guide rod II is provided with a guide rod II upper limit block that is located above the adapter plate, and the lower end of the guide rod II is connected to the amplification kit cap fixing plate; an amplification kit cap fixing mechanism provided at the bottom of the amplification kit cap fixing plate, which can fix the amplification kit cap on the amplification kit cap fixing plate; and the amplification kit body fixing plate is provided with several amplification kit body fixing grooves that penetrate the amplification kit cap fixing plate from top to bottom.

8. The all-in-one machine for sample testing according to claim 1, wherein the amplification kit area (306) can be loaded with amplification kit, that comprises a pre-mixing well that stores freeze-dried non-specific reagents not corresponding to the target, N dispensing wells that are physically spaced apart from the pre-mixing well, and a liquid seal reagent storage well, where N is an integer not less than 2; at least one of the N dispensing wells containing primer probe reagents corresponding to not less than M targets, where M is an integer not less than 2; the primer probe reagents stored in a second dried state; the liquid seal reagent storage part storing paraffin oil.

9. The all-in-one machine for sample testing according to claim 1, wherein the pipetting module (50) can pipetting liquid at a first pipetting speed, and mix and pipetting liquid at a second pipetting speed, wherein the first pipetting speed is 1/4-1/2 of the second pipetting speed.

10. The all-in-one machine for sample testing according to claim 1, wherein the casing (301) further internally comprises a process operation monitoring module comprising:
an intake module that is provided with at least one intake subunit for direct or indirect one-to-one correspondence with at least one medical consumable; the intake module connected to the at least one medical consumable moving to the automated loading area (303) of the carrying platform (204), the at least one medical consumable connected thereto processing the sample liquid in the automated loading area (303), in where the automated loading area (303) is configured with a sample tube area (304), an extraction kit area (305), and an amplification kit area (306); upon completion of the sample liquid processing, the intake module transferring the at least one medical consumable connected thereto for recycling;
a monitoring module that is provided with at least one TOF sensor (5002) corresponding to the at least one medical consumable, and continuously obtaining the distance between the at least one medical consumable connected thereto and the at least one TOF sensor (5002), during the time period (i)when at least one intake subunit is connected to the at least one medical consumable, and/or (ii) when the at least one medical consumable moves to the automated loading area (303), and/or (iii) when the at least one medical consumable transfers for recycling;
a processing module determining whether the process operation is correctly executed during different time periods based on the distance information;
the intake module internally comprising no less than two sub-intake modules: the first sub-intake module being a pipetting module (50) provided with at least one pipetting head (5001) for direct or indirect one-to-one correspondence with at least one pipetting tip (5003); the second sub-intake module being an extraction module (60) provided with at least one magnetic rod cover installation part (5005). for direct or indirect one-to-one correspondence with at least one magnetic rod cover (5006).

11. The all-in-one machine for sample testing according to claim 1, wherein the carrying platform (204) further comprises a thermal block for supplying amplification reaction conditions, a first air vent (801) located in the casing (301); the lower driving unit driving the carrying platform (204) to move relatively to the first air vent (801), therefore connecting to the first air vent (801) during the time period of thermal amplification reaction in the amplification kit area (306) to form a first air duct, while the carrying platform (204) is spaced apart from the first air vent (801) during at least part of the time period other than the time period of the thermal amplification reaction.

12. The all-in-one machine for sample testing according to claim 11, wherein the casing (301) further comprises a second air vent (802) that is located on the same side wall of the casing (301) as the first air vent (801); the second air vent (802) comprising an independent air duct (8021) connected thereto, and the second air vent (802) and the connected independent air duct (8021) are in operation to discharge the air in the casing (301) during at least part of the time period when the carrying platform (204) is spaced apart from the first air vent (801); and the casing (301) further comprises a third air vent (803) that is located on the same side wall of the casing (301) as the first air vent (801); and the casing (301) further comprises a fourth air vent (804) at the bottom or top of the casing (301), the third air vent (803) and the fourth air vent (804) forming a second air duct with a first ventilation direction during at least part of the whole running time period; the third air vent (803) and the fourth air vent (804) forming a third air duct with a second ventilation direction during the time period of the thermal amplification reaction in the amplification kit area (306).

13. The all-in-one machine for sample testing according to claim 1, wherein the combination module further comprises an identification module (40), and the upper driving unit can cooperate with the lower driving unit to at least partially overlap the first time period during which the corresponding identification module (40) moves with the second time period during which the corresponding carrying platform (204) moves; the consumable identification camera of the identification module (40) performing dynamic scanning identification or static scanning identification.

14. A control method of an all-in-one machine for sample testing, using the all-in-one machine for sample testing according to any of claims 1-13, comprising the following steps,
**a sample liquid transfer step:** the upper driving unit driving the pipetting module (50) to move during a first time period, the lower driving unit driving the carrying platform (204) to move during a second time period; the first and second time periods overlapping at least partially, and the upper and lower driving units cooperate with each other to drive the pipetting module (50) to move between the sample tube and the lysis well of the extraction kit to perform sample liquid transfer operations;
**a sample extraction and purification step:** the upper driving unit driving the extraction module (60) to move during a first time period, the lower driving unit driving the carrying platform (204) to move during a second time period; the first and second time periods overlapping at least partially, and the upper and lower driving units cooperate with each other to drive the extraction module (60) to move among the extraction kit wells to perform sample liquid extraction and purification operations;
**an amplification system establishment step:** the upper driving unit driving the pipetting module (50) to move during a first time period, the lower driving unit driving the carrying platform (204) to move during a second time period; the first and second time periods overlapping at least partially; and the upper and lower driving units cooperate with each other to drive the pipetting module (50) to move between the elution well of the extraction kit and the pre-mixing well of the amplification kit to perform eluent transfer operation; the pipetting module (50) performing mixing operations at the pre-mixing well, where n is a positive integer; the mixing operation involving the pipetting module (50) aspirating the eluent from the elution well and then transferring it into the pre-mixing well; after the thoroughly mixing of the eluent and the freeze-dried reagent, the upper and lower driving units cooperating with each other to drive the pipetting module (50) to perform solution dispensing operations among the amplification kit wells.

15. The control method of the all-in-one machine for sample testing according to claim 14, before the sample liquid transfer step, further comprising:
**a sample tube uncapping step:** the lifting component operating to lower the sample tube uncapping/capping mechanism (20) to the position corresponding to the target sample tube; the cap screwing component rotating counterclockwise/clockwise to drive the rotating head (2010) screwed with the sample cap; the cap screwing component continuously rotating to drive the sample cap to rotate counterclockwise/clockwise; the cap screwing component stopping to rise when the sample cap is unscrewed from the sample tube;
after the sample liquid transfer step, further comprising:
**a sample tube capping step:** the lifting component operating to lower the sample tube uncapping/capping mechanism (20) to the position corresponding to the target sample tube; the cap screwing component rotating clockwise/counterclockwise to drive the sample cap screwed onto the sample tube body; the cap screwing component continuously rotating clockwise/counterclockwise to drive the rotating head (2010) to disengage from the sample cap, and then the cap screwing component rises.

16. The control method of the all-in-one machine for sample testing according to claim 15, further comprising:
**a sample tube uncapping/capping sensing step:** when the cap screwing component rises to a first position, the sensor (2014) detecting whether the cap screwing component is directly or indirectly connected to the sample cap;
when the cap screwing component rises to a second position, the sensor (2014) detecting whether the cap screwing component is directly or indirectly connected to the sample tube body; a processing module determining whether the sample cap and sample tube body are correctly unscrewed or screwed based on the two detecting results from the sensor (2014).

17. The control method of the all-in-one machine for sample testing according to claim 14, before the sample liquid transfer step, further comprising:
**an extraction kit uncapping step:** a second lifting motor (3015) driving a second working layer (3018) and third working layer (3019) to move downwards along the Z axis, compressing elastic components (3021) therebetween; the lower driving unit driving the extraction kit area (305) to move along the Y axis, making the extraction kit cap (3002) slot in the second working layer (3018) snap on the flange of the extraction kit cap (3002), the extraction kit body (3001) fixing groove in the third working layer (3019) snapping on the extraction kit body (3001) flange; the second lifting motor (3015) driving the second working layer (3018) to move upwards along the Z axis, the elastic component (3021)s between the second working layer (3018) and third working layer (3019) still keeping compressed state; the extraction kit area (305) continuously moving along the Y axis until the extraction kit cap (3002) inserted into the extraction kit cap (3002) slot; achieving the target of opening the extraction kit under the condition of consistently pressing the extraction kit body (3001);
after the amplification system establishment step, further comprising:
**an extraction kit capping step:** the second lifting motor (3015) driving the second and third working layer (3019)s to move downwards along the Z axis, the second working layer (3018) provided with a pressing unit (3051) for applying pressing force to the extraction kit cap (3002); when the pressing unit (3051) is driven to connect to the extraction kit cap (3002), the pressing unit (3051) partially connected to the extraction kit cap (3002), thereby applying pressing force to a partial area of the extraction kit cap (3002); further provided with a relative movement driving part, the extraction kit cap (3002) relatively moving with a gland part (3050) driven by the relative movement driving part, the extraction kit cap (3002) being completely pressed and connected onto the extraction kit body (3001) , by the relative movement the extraction kit being capped.

18. The control method of the all-in-one machine for sample testing according to claim 14, wherein the relative positions of the extraction kit and the sample tube area (304) are respectively provided with a first pipetting tip well, a lysis well, a magnetic bead storage well, a washing well, an elution well, a magnetic rod cover well, and a second pipetting tip well from near to far; and the number of washing wells is more than one;
in the sample liquid transfer step, wherein the sample liquid transfer operation involves: moving pipetting module (50) to the first pipetting tip well and loading it with the sample liquid pipetting tip (5003); then transferring the sample liquid from the sample tube to the lysis well of the extraction kits; then recycling the sample liquid pipetting tip (5003) to the first pipetting tip well;
in the sample extraction and purification step, wherein the sample extraction and purification operation involves: moving the extraction module (60) to the magnetic rod cover well position and loading it with the magnetic rod cover (5006); then the extraction module (60) moving to the magnetic bead storage well position, the magnetic rod declining and extending into the magnetic rod cover (5006) to adsorb the magnetic beads from the magnetic bead storage well to the magnetic rod cover (5006); the extraction module (60) transferring the magnetic beads to the lysis well, the magnetic rod cover (5006) vibrating and mixing in the lysis well; the magnetic beads adsorbing lysed nucleic acid fragments, the extraction module (60) transferring the magnetic beads to the washing well for washing and purification; and if multiple washing and purification are required, the extraction module (60) driving the magnetic beads to transfer among multiple washing wells in sequence; after washing and purification, the extraction module (60) moving to the elution well position and releasing of nucleic acid fragments in the elution well; the extraction module (60) transferring the magnetic beads to the magnetic bead storage well for recycling, the magnetic rod rising, and the extraction module (60) recycling the magnetic rod cover (5006) back into the magnetic rod cover well.

19. The control method of the all-in-one machine for sample testing according to claim 18, wherein, the amplification system set-up step involves: moving the pipetting module (50) to the second pipetting tip well and loading it with the eluent pipetting tip (5003), and transferring the eluent from the elution well of the extraction kit to the pre-mixing well of the amplification kit in m batches, where m is an integer greater than or equal to 2;
the solution dispensing operation involves: dispensing the thoroughly pre-mixed solution to dispensing wells of the amplification kit; dispensing paraffin oil from the liquid seal reagent storage part to dispensing wells by aspirating once and dispensing multiple times; and the volume of paraffin oil in each dispensing well is smaller than the volume of pre-mixed solution.

20. The control method of the all-in-one machine for sample testing according to claim 14, before the sample liquid transfer step, further comprising:
**a loading configuration step:** with an opening and closing part (302) opened, the first motor (101) and second motor (201) in the lower driving unit working in series to drive the automated loading area (303) contained in the carrying platform (204) outside the casing (301); loading the sample tube in the sample tube area (304), loading the extraction kits in the extraction kit area (305), loading the amplification kits in the amplification kit area (306); then he first motor (101) and second motor (201) working in series to drive the automated loading area (303) back into the casing (301), with the opening and closing part (302) closed;
**a scanning identification step:** the upper driving unit driving the identification module (40) to move during a first time period, and the lower driving unit driving the carrying platform (204) to move during a second time period; the first and second time periods overlapping at least partially, and the identification module (40) performs scanning identification on a to-be-identified target; when the upper and lower driving units drive simultaneously, the consumable identification camera of the identification module (40) performing dynamic scanning, and when the upper driving unit drives separately, the consumable identification camera of the identification module (40) performing static scanning.
